(19) Europäisches Patentamt
European Patent Office
Office européen des brevets

(11) **EP 2 276 784 B1**

(12) **EUROPÄISCHE PATENTSCHRIFT**

(45) Veröffentlichungstag und Bekanntmachung des Hinweises auf die Patenterteilung:
**26.09.2018  Patentblatt 2018/39**

(21) Anmeldenummer: **09745734.5**

(22) Anmeldetag: **12.05.2009**

(51) Int Cl.:
*C08G 18/66* (2006.01)    *C08G 18/12* (2006.01)
*C09J 175/08* (2006.01)    *C08G 18/73* (2006.01)
*C08G 18/75* (2006.01)    *C08G 18/08* (2006.01)
*C08G 18/28* (2006.01)    *C08G 18/79* (2006.01)
*C08G 18/48* (2006.01)

(86) Internationale Anmeldenummer:
**PCT/EP2009/055716**

(87) Internationale Veröffentlichungsnummer:
**WO 2009/138402 (19.11.2009 Gazette 2009/47)**

(54) **HYDROXYL-FUNKTIONALISIERTES POLYURETHAN-HOTMELT-PREPOLYMER**

HOT MELT METHOD FOR THE PREPARATION OF A CHEMICALLY CROSS-LINKED POLYURETHANE FILM

PROCÉDÉ DE FABRICATION PAR VOIE FONDUE D'UN FILM DE POLYURÉTHANE RÉTICULÉ CHIMIQUEMENT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **13.05.2008  DE 102008023252**

(43) Veröffentlichungstag der Anmeldung:
**26.01.2011  Patentblatt 2011/04**

(73) Patentinhaber: **tesa SE**
**22848 Norderstedt (DE)**

(72) Erfinder:
• SCHÜMANN, Uwe
  **25421 Pinneberg (DE)**
• WEILAND, Kirstin
  **21035 Hamburg (DE)**

(56) Entgegenhaltungen:
**EP-A- 1 311 574      EP-A- 1 469 055**
**JP-A- 2006 182 795**

# EP 2 276 784 B1

**Beschreibung**

Die vorliegende Erfindung betrifft ein bei Raumtemperatur festes, schmelzbares, in vielen Lösungsmitteln lösliches, hydroxyl-funktionalisiertes, Polyurethan-Prepolymer, das langkettige Verzweigungsstellen enthält und für Haftklebeanwendungen geeignete viskoelastische Eigenschaften aufweist sowie dessen Verwendung.

Stoffe mit für Haftklebeanwendungen geeigneten viskoelastischen Eigenschaften zeichnen sich dadurch aus, dass sie bei mechanischer Deformation sowohl viskos fließen als auch elastische Rückstellkräfte aufbauen. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des zu betrachtenden Stoffes als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein gutes Anfließen auf das zu verklebende Substrat. Ein hoher Anteil an viskosem Fluss führt zu einer hohen Eigenklebrigkeit (auch als Haftklebrigkeit oder als Tack bezeichnet) und damit oft auch zu einer hohen Klebkraft. Stark vernetzte Systeme, kristalline oder glasartig erstarrte Polymere sind mangels fließfähiger Anteile in der Regel nicht eigenklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G'), Verlustmodul (G") sowie der als Verlustfaktor tan δ (tan delta) bezeichnete Quotient G"/G' herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel δ bezeichnet.
Der Speichermodul G' ist wie folgt definiert: G' = $\tau/\gamma \cdot \cos(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" = $\tau/\gamma \cdot \sin(\delta)$ ($\tau$ = Schubspannung, $\gamma$ = Deformation, $\delta$ = Phasenwinkel = Phasenverschiebung zwischen Schubspannungs- und Deformationsvektor).

Ein Stoff wird bezüglich seiner viskoelastischen Eigenschaften im Allgemeinen als für Haftklebeanwendungen geeignet angesehen, wenn bei Raumtemperatur im Frequenzbereich von $10^0$ bis $10^1$ rad/sec, idealerweise im Frequenzbereich von $10^{-1}$ bis $10^2$ rad/sec, G' im Bereich von $10^3$ bis $10^6$ Pa liegt und wenn G" ebenfalls in diesem Bereich liegt. Innerhalb dieses Bereiches, den man in einer Matrix-Auftragung aus G' und G" (G' aufgetragen in Abhängigkeit von G") auch als viskoelastisches Fenster für Haftklebeanwendungen oder als Haftklebstofffenster nach viskoelastischen Kriterien bezeichnen kann, gibt es wiederum unterschiedliche Sektoren und Quadranten, die die zu erwartenden Haftklebeeigenschaften der jeweils zugehörigen Stoffe näher charakterisieren. Stoffe mit hohem G" und niedrigem G' innerhalb dieses Fensters zeichnen sich beispielsweise im Allgemeinen durch eine hohe Klebkraft und eine geringe Scherfestigkeit aus, während sich Stoffe mit hohem G" und hohem G' sowohl durch eine hohe Klebkraft als auch durch eine hohe Scherfestigkeit auszeichnen.

Generell sind die Erkenntnisse über die Zusammenhänge zwischen Rheologie und Haftklebrigkeit Stand der Technik und beispielsweise in "Satas, Handbook of Pressure Sensitive Adhesive Technology, Third Edition, (1999), p. 153-203" beschrieben.

Eine von vielen alternativen Möglichkeiten zur Charakterisierung der viskoelastischen Eigenschaften eines Stoffes besteht darin, die Zugdehnungseigenschaften und das Relaxationsverhalten im Zugdehnungsversuch zu bestimmen. Im Zugdehnungsversuch werden unter anderem die Zugfestigkeit und die zugehörige Dehnung bestimmt. Das Relaxationsverhalten kann ebenfalls im Zugdehnungsversuch ermittelt werden. Dazu wird die Spannung im Augenblick des Erreichens einer bestimmten Dehnung gemessen. Die Spannung ist definiert als die Zugkraft am Probekörper, bezogen auf die Anfangsquerschnittsfläche innerhalb der Messlänge. Diese Dehnung wird weiter aufrecht erhalten. Nach einer bestimmten Zeit wird die Spannung erneut bestimmt. Die prozentuale Abnahme der Spannung ist die Relaxation.

Betrachtet man ein Klebeband oder einen anderweitigen selbstklebenden Artikel, so sind die für Haftklebeanwendungen geeigneten viskoelastischen Eigenschaften zunächst für die Haftklebstoffschicht des selbstklebenden Artikels von Bedeutung. Aber auch für andere Schichten eines Klebebandes können die für Haftklebeanwendungen geeigneten viskoelastischen Eigenschaften Bedeutung haben. Die Haftklebeeigenschaften eines Klebebandes werden nämlich nicht nur von den viskoelastischen Eigenschaften der Haftklebstoffschicht, sondern auch von den entsprechenden Eigenschaften der weiteren Schichten sowie auch der Dicken der Schichten mit beeinflusst. Das Prinzip des viskoelastischen Fensters für Haftklebeanwendungen pflanzt sich quasi durch alle Schichten eines Klebebandes fort. So kann eine Schicht mit für Haftklebeanwendungen geeigneten viskoelastischen Eigenschaften häufig auch vorteilhaft als Trägerschicht eingesetzt werden. Selbst für Funktionsschichten eines Klebebandes können die für Haftklebeanwendungen geeigneten viskoelastischen Eigenschaften vorteilhaft sein. Funktionsschichten können beispielsweise Primerschichten sein oder Schichten mit besonderen optischen, elektrischen oder wärmeleitenden Eigenschaften, um nur einige Beispiele zu nennen.

Im Hinblick auf die Herstellung selbstklebender Artikel in einem kontinuierlichen Beschichtungsprozess sind vielfältige Technologien bekannt. Grundsätzlich kann zwischen lösungsmittelbasierten und lösungsmittelfreien Technologien unterschieden werden.

In lösungsmittelbasierten Systemen liegt das haftklebrige Polymer beziehungsweise die haftklebrige Stoffmischung üblicherweise bereits vor der Beschichtung unvernetzt in Lösung vor. Kurz vor der Beschichtung auf einen Träger oder einen Hilfsträger wird gegebenenfalls ein chemischer Vernetzer zugemischt. Nach der Beschichtung und dem Abdampfen des Lösungsmittels liegt das haftklebrige Polymer beziehungsweise die haftklebrige Stoffmischung auf dem Träger oder dem Hilfsträger als Film oder filmartige Schicht vor und kann aufgewickelt werden, unabhängig davon, ob der Vernetzungsprozess bereits abgeschlossen ist oder nicht. Die Vernetzung beeinflusst den festen Charakter des haftklebrigen Polymers beziehungsweise der haftklebrigen Stoffmischung, der die Grundvoraussetzung für die Aufwickelbarkeit ist, in der Regel nicht merklich.

Lösungsmittelbasierte Technologien haben den grundsätzlichen Nachteil, dass sie nicht zur Herstellung dicker Schichten geeignet sind, insbesondere dann nicht, wenn mit einer wirtschaftlich vertretbaren Geschwindigkeit beschichtet werden soll. Bereits bei Schichtdicken ab ca. 100 bis 150 $\mu$m kommt es zur vermehrten, sichtbaren Bläschenbildung durch das abdampfende Lösungsmittel und damit zu deutlichen Qualitätseinbußen, so dass eine Verwendung als Schicht in einem Klebeband dann nicht mehr in Frage kommt. Auch bei der Herstellung dünnerer Schichten ist die Beschichtungsgeschwindigkeit durch die Notwendigkeit, das Lösungsmittel abzudampfen, erheblich limitiert. Zudem verursachen lösemittelbasierte Beschichtungsprozesse erhebliche Prozesskosten durch die Notwendigkeit der Lösemittelrückgewinnung oder -verbrennung.

Lösungsmittelfreie Systeme können unterteilt werden in Reaktivsysteme, die auch ohne Lösungsmittel bei Raumtemperatur flüssig, sirupartig oder pastös sind und in Hotmeltsysteme, in denen das haftklebrige Polymer beziehungsweise die haftklebrige Stoffmischung bei Raumtemperatur fest und bei Zufuhr von Wärme schmelzbar sind.

Typische Beispiele für bei Raumtemperatur flüssige, sirupartige oder pastöse Reaktivsysteme sind die allgemein bekannten zweikomponentigen Polyurethane, Epoxide oder Silikone. Mit derartigen Reaktivsystemen können sowohl dünne als auch dicke Schichten hergestellt werden, was einen großen Vorteil gegenüber lösungsmittelbasierten Systemen darstellt.

Bei Raumtemperatur flüssige, sirupartige oder pastöse Reaktivsysteme haben aber im Hinblick auf eine Klebebandfertigung den Nachteil, dass sie im flüssigen, sirupartigen oder pastösen Zustand nicht oder zumindest nicht mit konstanter Schichtdicke aufgewickelt werden können, insbesondere dann nicht, wenn es sich um hohe Schichtdicken handelt. Mit konstanter Schichtdicke können nur feste Polymerfilme aufgewickelt werden. Die Verfestigung lösungsmittelfreier, bei Raumtemperatur flüssiger Reaktivsysteme, ist an das Voranschreiten einer chemischen Reaktion gekoppelt, die in der Regel nach dem Vermischen der Komponenten einsetzt. Der Reaktionsfortschritt benötigt eine gewisse Zeit. Erst wenn es zur Verfestigung des Films durch einen genügend hohen Umsetzungsgrad der jeweiligen chemischen Reaktion gekommen ist, kann der auf einen Träger oder Hilfsträger beschichtete Film aufgewickelt werden. Somit sind solche Systeme in der Beschichtungsgeschwindigkeit limitiert.

Die in EP 1 469 024 A2, in EP 1 469 055 B1, in EP 1 849 811 A1 oder in WO 2008/009542 A1 beschrieben Haftklebstoffe auf Polyurethanbasis fallen in diese Kategorie von Reaktivsystemen. Sie sind somit als Film und/oder Haftklebstoffschicht als Bestandteil eines Klebebandes nur mit einer limitierten und daher im Regelfall wenig ökonomischen Beschichtungsgeschwindigkeit herstellbar.

Auch die in EP 0 801 121 B1 und EP 0 894 841 B1 beschriebenen Selbstklebeband-Träger auf Polyurethanbasis haben wie die oben aufgeführten Haftklebstoffe den Nachteil, dass sie während der Beschichtung aus flüssigen oder pastösen Komponenten hergestellt werden. Somit muss auch hier der Reaktionsfortschritt abgewartet werden, bis diese Träger aufgewickelt werden können, was die Beschichtungsgeschwindigkeit und somit die Wirtschaftlichkeit der Herstellung limitiert.

Der gleiche Nachteil trifft für die Stoffe zu, die nach dem in EP 1 095 993 B1 beschriebenen Verfahren zur kontinuierlichen Herstellung von selbstklebenden Artikeln aus zweikomponentigen Polyurethanen hergestellt werden.

Klebebänder bzw. Klebebandschichten auf Basis sirupartiger Komponenten sind zum Beispiel in EP 0 259 094 B1 oder in EP 0 305 161 B1 beschrieben, in denen der Polymeraufbau bzw. die Vernetzung durch Photopolymerisation erzielt wird.

Auch diese Reaktivsysteme haben den Nachteil, dass sie in ihrem sirupartigen Zustand nicht oder zumindest nicht mit konstanter Schichtdicke aufgewickelt werden können. Auch hier ist die Aufwickelfähigkeit an einen Reaktionsfortschritt gebunden, der eine gewisse Zeit benötigt. Somit sind auch solche Systeme in der Beschichtungsgeschwindigkeit limitiert.

Flüssige, sirupartige oder pastöse Reaktivsysteme, deren Polymeraufbau und deren Vernetzung von außen zum Beispiel durch UV- oder ESH-Strahlung initiiert wird, haben in der Regel den zusätzlichen Nachteil, dass es nur dann zu einem Polymeraufbau mit durchgehend homogenen Eigenschaften kommt, wenn die Strahlung gleichmäßig alle am Polymeraufbau beteiligten Moleküle durch die gesamte Dicke des Films hindurch erreicht. Dies ist insbesondere bei hohen Schichtdicken oder bei mit Füllstoffen gefüllten Systemen nicht der Fall, so dass solche Filme dann ein inhomogen vernetztes Polymergerüst aufweisen.

Hotmeltsysteme haben gegenüber den flüssigen, sirupartigen oder pastösen Reaktivsystemen den Vorteil, dass mit ihnen hohe Beschichtungsgeschwindigkeiten erzielbar sind, insbesondere bei ihrer Verarbeitung in Extrusionsprozessen. In Extrusionsprozessen werden bei Raumtemperatur feste, schmelzbare Polymere (Hotmelts) geschmolzen, in diesem Zustand bei höheren Temperaturen zu einem Film ausgeformt und in der Regel auf einen Träger oder Hilfsträger beschichtet. Nach Abkühlung und damit Verfestigung kann sofort aufgewickelt werden. Die Aufwickelfähigkeit ist nicht an das Voranschreiten einer chemischen Reaktion gebunden. Der Prozess der Abkühlung eines Films nimmt in aller Regel nur vergleichsweise wenig Zeit in Anspruch. Wie mit den flüssigen, sirupartigen oder pastösen Reaktivsystemen können auch mit Hotmeltsystemen Schichten ohne eine grundsätzliche Dickenlimitierung hergestellt werden. Im Klebebandbereich werden vor allem Styrol-Blockcopolymer-haltige Haftklebstoffe, beschrieben beispielsweise in DE 100 03 318 A1 oder DE 102 52 088 A1, auf diese Weise beschichtet.

Für Hotmelt-Systeme ergibt sich aber regelmäßig aufgrund der hohen Verarbeitungstemperaturen und der damit verbundenen Einschränkung für thermische Vernetzungsverfahren das Problem, dass - bei Vernetzung der Schichten mit aktinischer Strahlung - aufgrund der dickenbeschränkten Eindringtiefe und dickenabhängige Eindringintensität der Strahlung eine homogene Vernetzung durch die Schicht hindurch nicht möglich ist, insbesondere für dicke Schichten.

Auch thermoplastische Polyurethane können in Hotmelt-Prozessen verarbeitet werden. DE 20 59 570 A beschreibt beispielsweise ein kontinuierliches Einschritt-Herstellungsverfahren für ein thermoplastisches, unporiges Polyurethan.

Die Herstellung thermoplastisch verarbeitbarer Polyurethane aus einem zunächst als Zwischenstufe hergestellten OH-terminierten linearen Prepolymer ist beispielsweise in DE10 2005 039 933 A beschrieben. Auch DE 22 48 382 C2 beschreibt die Herstellung von thermoplastischen Polyurethanen aus OH-terminierten Prepolymeren in einem mehrstufigen Prozess. In den genannten Schriften werden keine Polyole mit einer höheren Funktionalität als zwei eingesetzt. Hinweise auf für Haftklebeanwendungen geeignete viskoelastische Eigenschaften der nach den Lehren dieser Schriften herstellbaren Polyurethane werden nicht gegeben. Auch in US 2007/0049719 A1 werden hydroxylterminierte Polyurethan-Prepolymere beschrieben. Auch dort handelt es sich ausschließlich um lineare Prepolymere, aufgebaut aus rein difunktionellen Ausgangsstoffen ohne Verzweigungsstellen. Hinweise auf für Haftklebeanwendungen geeignete viskoelastische Eigenschaften werden auch dort nicht gegeben.

Hydroxyl-terminierte Polyurethan-Prepolymere werden ebenfalls in US 2007/0129456 A1 beschrieben. Diese Prepolymere dienen der Herstellung von synthetischem Leder und sind bei Raumtemperatur flüssig oder halbfest. Sie enthalten kristallines Polyether-Polyol und kristallines Polyester-Polyol. Hinweise auf für Haftklebeanwendungen geeignete viskoelastische Eigenschaften werden nicht gegeben. Es werden auch keine Hinweise auf einen zum Aufwickeln als Klebebandrolle genügend festen Charakter dieser Prepolymere gegeben.

Hotmelt-Beschichtungsprozesse auf Basis thermoplastischer oder thermoplastisch verarbeitbarer Polymere haben zwar die Vorteile einer hohen erzielbaren Beschichtungsgeschwindigkeit sowie der Herstellbarkeit dicker Schichten, führen aber zu Polymerfilmen, die nicht oder zumindest nicht ausreichend vernetzt sind, so dass diese Filme als Klebebandschichten, bei denen es auf eine hohe dauerhafte Belastbarkeit, insbesondere bei höheren Temperaturen ankommt, nicht geeignet sind.

Die Extrusion von Polyurethanelastomeren unter Mitverwendung von Triolen, die zu einem vernetzten Charakter der Elastomere führen könnten, ist beispielsweise aus DE 19 64 834 A und aus DE 23 02 564 C3 bekannt. In diesen Schriften wird aber die Umsetzung flüssiger Ausgangsstoffe beschrieben, so dass der Nachteil vorliegt, dass vor dem Aufwickeln solcher Elastomere die vom Reaktionsfortschritt abhängige Verfestigung abgewartet werden muss. Hinweise auf für Haftklebeanwendungen geeignete viskoelastische Eigenschaften der nach den in diesen Schriften beschriebenen Verfahren hergestellten Produkte werden nicht gegeben. In den in diesen Schriften beschriebenen Verfahren werden zudem keine hydroxyl-terminierten Prepolymere verwendet, sondern nur isocyanat-terminierte. Das Molekulargewicht der in diesen Schriften verwendeten Triole wird mit 500 nach oben begrenzt.

In EP 0 135 111 B1 wird die Herstellung von verzweigten, aber thermoplastisch verarbeitbaren und somit nicht vernetzten Polyurethanen in einem mehrstufigen Verfahren beschrieben. Als erste Zwischenstufe A wird ein OH-terminiertes Prepolymer vorgeschlagen, das aus im Wesentlichen linearen höhermolekularen Polyhydroxylverbindungen aufgebaut ist. Das Molekulargewicht der Polyhydroxylverbindungen wird mit 550 nach unten begrenzt. Hinweise auf für Haftklebeanwendungen geeignete viskoelastische Eigenschaften oder auf Hotmelteigenschaften des OH-terminierten Prepolymers werden nicht gegeben.

In JP 2006/182795 wird ein hydroxyl-funktionalisiertes Polyurethan-Prepolymer aus einem Polyether-Polyol-Gemisch, bestehend aus einem Polyether-Diol und einem Polyether-Triol, und Polyisocyanat beschrieben. Die durchschnittliche Funktionalität des Polyol-Gemisches beträgt 2,2 bis 3,4. Weiter wird die Umsetzung dieses Prepolymers mit einem polyfunktionellen Isocyanat zu einem Klebstofffilm beschrieben. Das hydroxyl-funktionalisierte Polyurethan-Prepolymer in JP 2006/182795 ist jedoch kein Hotmelt. In JP 2006/182795 wird das Molekulargewicht der Diole mit 700 nach unten abgegrenzt. Hinweise auf für Haftklebeanwendungen geeignete viskoelastische Eigenschaften werden nicht gegeben.

Hotmelt-Beschichtungsprozesse, die zu vernetzten Polymerfilmen führen, sind zum Beispiel aus DE 10 2004 044 086 A1 bekannt. Dort wird ein Verfahren zur Herstellung eines Klebebandes auf Basis eines Acrylat-Schmelzhaftklebers beschrieben, dem im geschmolzenen Zustand in einem Extruder ein thermischer Vernetzer zugesetzt wird.

Eine Schwierigkeit des dort beschriebenen Verfahrens ist die Notwendigkeit, den Acrylat-Schmelzhaftkleber zunächst in einem Lösemittel polymerisieren zu müssen und dieses Lösemittel anschließend mittels eines Aufkonzentrationsextruders wieder entfernen zu müssen. Ein weiterer Nachteil ist die relativ hohe Molmasse des Polyacrylats (gewichtsgemitteltes $M_W$: 300000 bis 1500000 g/mol). Hohe Molmassen erfordern hohe Verarbeitungstemperaturen und damit hohe Prozesskosten und können außerdem bei Extrusionsprozessen zu ungleichen Polymereigenschaften in Längs- und Querrichtung führen.

Aufgabe der Erfindung ist es, einen Stoff oder eine stoffliche Zusammensetzung zur Verfügung zu stellen, der beziehungsweise die die Nachteile des Standes der Technik vermeidet oder zumindest vermindert.

Insbesondere vorteilhaft sollte ein derartiger Stoff beziehungsweise eine derartige stoffliche Zusammensetzung eines, vorteilhaft mehrere, bevorzugt alle der folgenden Kriterien erfüllen:

Der Stoff beziehungsweise die stoffliche Zusammensetzung sollen für Haftklebeanwendungen geeignete viskoelastische Eigenschaften aufweisen, das heißt, sowohl der Speichermodul G' als auch der Verlustmodul G" des Stoffes beziehungsweise der stofflichen Zusammensetzung sollen im Bereich von $10^3$ Pa bis $10^6$ Pa liegen, ermittelt bei Raumtemperatur im Deformationsfrequenzbereich von $10^0$ bis $10^1$ rad/sec, vorzugsweise im Deformationsfrequenzbereich von $10^{-1}$ bis $10^2$ rad/sec, per Dynamisch Mechanischer Analyse (DMA) mit einem schubspannungsgesteuerten Rheometer in einer Platte/Platte-Anordnung. Der Stoff beziehungsweise die stoffliche Zusammensetzung sollen chemisch vernetzbar sein und sollen insbesondere auch nach der Vernetzung für Haftklebeanwendungen geeignete viskoelastische Eigenschaften gemäß der oben aufgeführten Kriterien aufweisen. Der Stoff beziehungsweise die stoffliche Zusammensetzung sollen hinsichtlich ihrer viskoelastischen Eigenschaften ein breites Spektrum an Variationsmöglichkeiten zulassen, so dass ein breites Spektrum an Haftklebeeigenschaften eingestellt werden kann. Der Stoff beziehungsweise die stoffliche Zusammensetzung sollen nach der Vernetzung für die Verwendung als Trägerschichten, Haftklebstoffschichten oder auch als Funktionsschichten in Klebebändern oder anderen selbstklebenden Artikeln geeignet sein.

Der Stoff beziehungsweise die stoffliche Zusammensetzung sollen Hotmelts sein, das heißt, sie sollen bei Raumtemperatur fest und durch Wärmezufuhr schmelzbar sein.

Der Stoff beziehungsweise die stoffliche Zusammensetzung sollen wahlweise in einem kontinuierlichen Beschichtungs- und Vernetzungsprozess zum Beispiel in einem Extrusionsverfahren, oder in einem diskontinuierlichen Verfahren beschichtbar und vernetzbar sein.

Der Stoff beziehungsweise die stoffliche Zusammensetzung sollen so geartet sein, dass sie die Nachteile des Standes der Technik nicht, oder zumindest nicht in dem Umfang aufweisen. Insbesondere sollen der Stoff beziehungsweise die stoffliche Zusammensetzung lösemittelfrei herstellbar und verarbeitbar sein. Bei Bedarf sollen sie aber auch in Lösemitteln hergestellt und verarbeitet werden können. Die aus dem Stoff beziehungsweise der stofflichen Zusammensetzung in einem Extrusionsprozess erzeugten, vernetzten Polymerfilme sollen in Längs- und Querrichtung gleiche Eigenschaften haben.

Gelöst wird diese Aufgabe durch die Verwendung eines hydroxyl-funktionalisierten Polyurethan-Hotmelt-Prepolymers als Haftklebstoff, wie sie im Hauptanspruch dargelegt ist. Die Unteransprüche betreffen dabei vorteilhafte Weiterbildungen des Prepolymers, des Verfahrens zur Herstellung desselben sowie dessen Verwendungsmöglichkeiten.

Die vorliegende Erfindung betrifft insbesondere ein bei Raumtemperatur festes, schmelzbares, in vielen Lösungsmitteln lösliches, hydroxyl-funktionalisiertes, Polyurethan-Prepolymer, das langkettige Verzweigungsstellen enthält und für Haftklebeanwendungen geeignete viskoelastische Eigenschaften aufweist. Durch Umsetzung mit mindestens difunktionellen Polyisocyanaten und Beschichtung während der Umsetzungsphase kann aus diesem Prepolymer ein chemisch vernetzter Polyurethanfilm mit für Haftklebeanwendungen geeigneten viskoelastischen Eigenschaften hergestellt werden, der somit als Haftklebstoff-, Träger- oder Funktionsschicht in Klebebändern oder anderen selbstklebenden Artikeln Verwendung finden kann. Die Umsetzung mit den mindestens difunktionellen Polyisocyanaten kann wahlweise in Lösung oder in der Schmelze erfolgen. Der Vernetzungs- und Beschichtungsprozess kann wahlweise kontinuierlich, zum Beispiel in einem Extrusionsverfahren oder diskontinuierlich erfolgen.

Der Hauptanspruch betrifft die Verwendung eines hydroxyl-funktionalisierten Polyurethan-Hotmelt-Prepolymers, das das chemische Umsetzungsprodukt isocyanatreaktiver Ausgangsstoffe mit zumindest einem isocyanathaltigen Ausgangsstoff umfasst, dadurch gekennzeichnet, dass die isocyanatreaktiven Ausgangsstoffe des hydroxyl-funktionalisierten Polyurethan-Hotmelt-Prepolymers zumindest ein Polypropylenglykol mit einer Funktionalität von größer zwei und einer zahlengemittelten mittleren Molmasse von größer oder gleich 3000 g/mol (im folgenden als "Polypropylenglykol PI" bezeichnet), zumindest ein Polypropylenglykol mit einer Funktionalität von kleiner oder gleich zwei und einer zahlengemittelten mittleren Molmasse von kleiner oder gleich 1000 g/mol ("im folgenden als Polypropylenglycol PII" bezeichnet) und zumindest einen Kettenverlängerer mit einer Funktionalität von kleiner oder gleich zwei und einer zahlengemittelten mittleren Molmasse von kleiner 500 g/mol (im folgenden als "Kettenverlängerer KI" bezeichnet) umfassen, wobei das Polypropylenglykol PII eine mindestens doppelt so große zahlengemittelte mittlere Molmasse wie der Kettenverlängerer KI hat und die zahlengemittelten Molmassen jeweils durch Gelpermeationschromatografie bestimmt werden, und dass der isocyanathaltige Ausgangsstoff des hydroxyl-funktionalisierten Polyurethan-Hotmelt-Prepolymers ein aliphatisches oder alicyclisches Diisocyanat umfasst, als Haftklebstoff.

Das hydroxyl-funktionalisiertes Polyurethan-Hotmelt-Prepolymer ist also insbesondere dadurch gekennzeichnet, dass es durch Umsetzung zumindest drei isocyanatreaktiver Komponenten und zumindest einer isocayanathaltigen Komponente erhältlich ist. Das Polypropylenglycol PII hat eine mindestens doppelt so große oder größere zahlengemittelte mittlere Molmasse wie der Kettenverlängerer KI, besonders bevorzugt ist sie mindestens dreimal so groß oder größer.

Polymere oder Prepolymere, die die Eigenschaft besitzen, schmelzfähig und somit thermoplastisch verarbeitbar zu sein, werden in dieser Schrift, wie im Sprachgebrauch des Fachmanns üblich, als Hotmelts bezeichnet.

Unter einem Polyurethan-Hotmelt-Prepolymer wird in dieser Schrift ein durch chemische Umsetzung einer mehrere Polyole umfassenden Mischung mit einem oder mehreren Polyisocyanaten erhaltenes insbesondere schmelzfähiges Reaktionsprodukt verstanden, das bei Raumtemperatur derart fest und formstabil ist, dass bei Raumtemperatur eine Compoundierung in bekannten Mischaggregaten (sowie insbesondere auch eine Ausformung oder ähnliche Verarbeitungsschritte) ohne das Hinzufügen von Lösemitteln, Verdünnungsmitteln oder anderer, die Viskosität herabsetzender Zusatzstoffe nicht möglich ist. Bekannte Mischaggregate sind beispielsweise Kneter, Innenmischer, Extruder, Planetwalzenextruder, Planetenmischer, Butterfly-Mischer oder Dissolver. Die Verarbeitbarkeit eines schmelzfähigen Reaktionsprodukts im Sinne dieser Schrift ist erst dann möglich, wenn das schmelzfähige Reaktionsprodukt erwärmt wird, wobei die Wärme von außen durch Beheizung zugeführt oder durch Scherung erzeugt werden kann. Typische Verarbeitungstemperaturen für schmelzfähige Reaktionsprodukte im Sinne dieser Schrift liegen im Bereich von 70° bis 160 °C, mindestens betragen sie 40 °C. Als Raumtemperatur wird in dieser Schrift der Temperaturbereich von 20 °C bis 25 °C, idealerweise 23 °C, verstanden.

Ein schmelzfähiges Reaktionsprodukt im Sinne dieser Schrift hat eine mit einem Rheometer im Oszillationsversuch bei einer sinusförmig oszillierenden Scherbeanspruchung in einer Platte-Platte-Anordnung, einer Temperatur von 23 °C und einer Oszillationsfrequenz von 10 rad/s gemessene komplexe Viskosität von mindestens 8000 Pas, vorzugsweise mindestens 10000 Pas. Bei 70 °C und einer Frequenz von 10 rad/s beträgt die komplexe Viskosität mindestens 100 Pas, vorzugsweise mindestens 200 Pas.

Die komplexe Viskosität $\eta^*$ ist folgendermaßen definiert: $\eta^* = G^* / \omega$

($G^*$ = komplexer Schubmodul, $\omega$ = Winkelfrequenz).

Die weiteren Definitionen lauten: $G^* = \sqrt{(G')^2 + (G'')^2}$ ($G''$ = Viskositätsmodul (Verlustmodul), $G'$ = Elastizitätsmodul (Speichermodul)).

$G'' = \tau/\gamma \cdot \sin(\delta)$ ($\tau$ = Schubspannung, $\gamma$ = Deformation, $\delta$ = Phasenwinkel = Phasenverschiebung zwischen Schubspannungs- und Deformationsvektor).

$G' = \tau/\gamma \cdot \cos(\delta)$ ($\tau$ = Schubspannung, $\gamma$ = Deformation, $\delta$ = Phasenwinkel = Phasenverschiebung zwischen Schubspannungs- und Deformationsvektor).

$\omega = 2\pi \cdot f$ (f = Frequenz).

Überraschend wurde gefunden, dass für Haftklebeanwendungen geeignete viskoelastischen Eigenschaften in Kombination mit den Hotmelteigenschaften und der Vernetzbarkeit durch weitere Umsetzung des hydroxyl-funktionalisierten Polyurethan-Hotmelt-Prepolymers mit einem oder mehreren Polyisocyanaten insbesondere dann erzielt werden, wenn das hydroxyl-funktionalisierte Polyurethan-Hotmelt-Prepolymer Verzweigungsstellen enthält und wenn die Stoffe, von denen die Verzweigungsstellen ausgehen, isocyanatreaktive Ausgangsstoffe des hydroxyl-funktionalisierten Polyurethan-Hotmelt-Prepolymers sind oder umfassen, die wiederum zumindest ein Polypropylenglykol mit einer Funktionalität von größer zwei und einer zahlengemittelten mittleren Molmasse von größer oder gleich 3000 g/mol (Polypropylenglycol PI), zumindest ein Polypropylenglykol mit einer Funktionalität von kleiner oder gleich zwei und einer zahlengemittelten mittleren Molmasse von kleiner oder gleich 1000 g/mol (Polypropylenglycol PII) und zumindest einen Kettenverlängerer mit einer Funktionalität von kleiner oder gleich zwei und einer zahlengemittelten mittleren Molmasse von kleiner oder gleich 500 g/mol (Kettenverlängerer KI) sind oder umfassen und wenn der isocyanathaltige Ausgangsstoff des hydroxyl-funktionalisierten Polyurethan-Hotmelt-Prepolymers ein aliphatisches oder alicyclisches Diisocyanat ist oder umfasst. Verzweigungsstellen gehen weiterhin von allen tri- und höherfunktionellen Molekülen aus, welche am chemischen Aufbau des hydroxyl-funktionalisierten Polyurethan-Hotmelt-Prepolymers beteiligt sind. Das Ausmaß der Verzweigung wird im Wechselspiel mit der Länge der erzeugten Prepolymerketten so eingestellt, dass die Schmelzbarkeit dieses hydroxyl-funktionalisierten Polyurethan-Prepolymers gewährleistet ist, dass sich also ohne Zugabe zusätzlicher vernetzender Substanzen keine vernetzten Strukturen ausbilden. Erst wenn der Anteil an Verzweigungsstellen im Prepolymer ein bestimmtes Maß überschreitet, deren Berechnung bzw. rechnerische Abschätzung im Folgenden kurz beschrieben wird, setzt Gelierung ein, das heißt, es bilden sich vernetzte Strukturen aus.

Das Verhältnis der Gesamtanzahl der Isocyanat-Gruppen zur Gesamtanzahl der Hydroxylgruppen, im Folgenden kurz NCO/OH-Verhältnis genannt, der am molekularen Aufbau des hydroxyl-funktionalisierten Polyurethan-Hotmelt-Prepolymers beteiligten Ausgangsstoffe ist insbesondere kleiner als 1,0, um die Hydroxyl-Funktionalisierung zu erreichen. Um vernetzte Strukturen auszuschließen, darf der sogenannte Gelpunkt nicht überschritten werden. Der theoretische Gelpunkt lässt sich mit der Gelpunktsgleichung von P.J.Flory berechnen. Eine aus der Flory-Gleichung abgeleitete Formel zur Abschätzung des Gelierungs- NCO/OH-Verhältnisses in Polyurethan-Bildungsreaktionen aus Diolen und Triolen mit Diisocyanaten im Unterschuss, lautet:

$$\left[\frac{NCO}{OH}\right]_{Gelierung} = \frac{1}{1 + \dfrac{1}{\dfrac{(Diol\text{-}OH)}{(Triol\text{-}OH)} + 1}}$$

Wird das Gelierungs-NCO/OH-Verhältnis erreicht oder überschritten, muss mit der Ausbildung vernetzter Strukturen, also mit dem Einsetzen einer Gelierung, gerechnet werden. In der Praxis ist dies allerdings häufig nicht der Fall, da viele der kommerziell erhältlichen Diole und Triole auch einen meist undefiniert hohen Anteil an monofunktionellen Molekülen enthalten. Somit liefert die Formel nur einen ungefähren Anhaltspunkt, ab welchem NCO/OH-Verhältnis der tatsächliche Gelpunkt erreicht wird.

Mit Diol-OH ist in dieser Formel die Gesamtanzahl der an der Prepolymer-Bildungsreaktion beteiligten, von difunktionellen Polyolen herrührenden Hydroxylgruppen gemeint. Mit Triol-OH ist entsprechend die Gesamtanzahl der an der Prepolymer-Bildungsreaktion beteiligten Hydroxylgruppen gemeint, die an trifunktionellen Polyolen gebunden sind. Werden zum Beispiel ausschließlich trifunktionelle Polyole mit Diisocyanat zu einem hydroxyl-funktionalisiertem Prepolymer umgesetzt, so liegt das kritische NCO/OH-Verhältnis bei 0,5. Wird dieses NCO/OH-Verhältnis überschritten, muss mit der Ausbildung vernetzter Strukturen, also mit einer Gelierung gerechnet werden, die zu nicht schmelzbaren Prepolymeren führt.

Um zu erreichen, dass das hydroxyl-funktionalisierte Polyurethan-Prepolymer bei Raumtemperatur fest ist, muss dafür gesorgt werden, dass entweder der kristalline Schmelzpunkt, die Glasübergangstemperatur oder gegebenenfalls beides oberhalb Raumtemperatur oder zumindest in Raumtemperatur-Nähe liegt. Dies ist über die Auswahl und Zusammenstellung der an der Bildungsreaktion zum hydroxyl-funktionalisierten Polyurethan-Hotmelt-Prepolymer beteiligten Polyole und Polyisocyanate auf vielerlei Art realisierbar. Beispielsweise können kristalline, bei Raumtemperatur feste, Polyole eingesetzt werden oder es kann ein hoher Anteil an kurzkettigen Polyolen verwendet werden, der nach Umsetzung mit dem Polyisocyanat zu einem hohen Anteil an Hartsegmenten innerhalb der Prepolymerstruktur führt. Der Fachmann muss allerdings davon ausgehen, dass ein hydroxyl-funktionalisiertes Polyurethan-Prepolymer keine für Haftklebeanwendungen geeigneten viskoelastischen Eigenschaften aufweist, sobald der kristalline Schmelzpunkt, die Glasübergangstemperatur oder gegebenenfalls beides oberhalb Raumtemperatur oder zumindest in Raumtemperatur-Nähe liegt.

Überraschend wurde gefunden, dass die Hotmelteigenschaften in Kombination mit den für Haftklebeanwendungen geeigneten viskoelastischen Eigenschaften und der Vernetzbarkeit dann erzielt werden, wenn die isocyanatreaktiven Ausgangsstoffe des hydroxyl-funktionalisierten Polyurethan-Hotmelt-Prepolymers zumindest ein Polypropylenglykol PII mit einer Funktionalität von kleiner oder gleich zwei und einer zahlengemittelten mittleren Molmasse von kleiner oder gleich 1000 g/mol und zumindest einen Kettenverlängerer KI mit einer Funktionalität von kleiner oder gleich zwei und einer zahlengemittelten mittleren Molmasse von kleiner oder gleich 500 g/mol umfassen, wenn der isocyanathaltige Ausgangsstoff des hydroxyl-funktionalisierten Polyurethan-Hotmelt-Prepolymers ein aliphatisches oder alicyclisches Diisocyanat umfasst und wenn weiterhin die isocyanatreaktiven Ausgangsstoffe des hydroxyl-funktionalisierten Polyurethan-Hotmelt-Prepolymers ein Polypropylenglykol PI mit einer Funktionalität von größer zwei und einer zahlengemittelten mittleren Molmasse von größer oder gleich 3000 g/mol umfassen.

Vorteilhaft kann der Hotmelt-Charakter erzielt werden, indem der anzahlmäßige Anteil der am molekularen Aufbau des hydroxyl-funktionalisierten Polyurethan-Hotmelt-Prepolymers beteiligten Moleküle mit einer relativen Molmasse von kleiner oder gleich 1000 g/mol so bemessen wird, dass er mindestens 70 %, bevorzugt mindestens 80 % beträgt. Der anzahlmäßige Anteil entspricht stets dem Stoffmengenanteil.

Für besonders typische, sogenannte "general purpose"-Haftklebeanwendungen geeignete viskoelastischen Eigenschaften können in Kombination mit den Hotmelteigenschaften und der Vernetzbarkeit erzielt werden, wenn der anzahlmäßige Anteil der zur Bildung des hydroxyl-funktionalisierten Polyurethan-Hotmelt-Prepolymers eingebrachten Hydroxylgruppen, die von einem Polypropylenglykol mit einer Funktionalität größer zwei und einer zahlengemittelten mittleren Molmasse von größer oder gleich 3000 g/mol (Polypropylenglykol PI) stammen, mindestens 2,5 % , bevorzugt mindestens 5,0 % und/oder maximal 25,0 %, bevorzugt maximal 20,0 % beträgt. Für besonders typische, sogenannte "general purpose"-Haftklebeanwendungen geeignete viskoelastischen Eigenschaften können in Kombination mit den Hotmelteigenschaften und der Vernetzbarkeit weiterhin vorteilhaft erzielt werden, wenn die zahlengemittelte mittlere Molmasse des Polypropylenglykols PI mit einer Funktionalität von größer zwei größer oder gleich 4500 g/mol, bevorzugt größer oder gleich 5500 g/mol beträgt, die zahlengemittelte mittlere Molmasse des Polypropylenglykols PII mit einer Funktionalität von kleiner oder gleich zwei kleiner oder gleich 800 g/mol, bevorzugt kleiner oder gleich 600 g/mol beträgt oder wenn die zahlengemittelte mittlere Molmasse des Kettenverlängerers KI mit einer Funktionalität von kleiner oder gleich zwei kleiner oder gleich 400 g/mol, bevorzugt kleiner oder gleich 200 g/mol beträgt. Ein besonders bevorzugter Kettenverlängerer ist 2-Methyl-1,3-propandiol.

Zur Erzielung der für die besonders typischen, sogenannten "general purpose"-Haftklebeanwendungen geeigneten viskoelastischen Eigenschaften hat es sich als besonders günstig herausgestellt, wenn das aliphatische oder alicyclische Diisocyanat Dicyclohexylmethandiisocyanat und/oder Isophorondiisocyanat sind oder umfassen.

Im Hinblick auf die Verwendung des hydroxyl-funktionalisierten Polyurethan-Hotmelt-Prepolymers als Schicht in einem Klebeband oder in einem selbstklebenden Artikel hat sich gezeigt, dass besonders vorteilhafte, für Haftklebeanwendungen geeignete viskoelastische Eigenschaften, die die Entwicklung maßgeschneiderter auf variable, sich ändernde Anforderungsprofile hin zugeschnittene Klebebandschichten ermöglichen, erreicht werden, wenn möglichst lange Prepolymerketten ausgebildet werden, unabhängig davon, ob das hydroxyl-funktionalisierten Polyurethan-Hotmelt-Prepolymer mit Polyisocyanaten weiter umgesetzt, insbesondere also vernetzt wird. Dies wird erreicht, indem das Verhältnis der Gesamtanzahl der Isocyanat-Gruppen zur Gesamtanzahl der Hydroxylgruppen der am molekularen Aufbau des hydroxyl-funktionalisierten Polyurethan-Hotmelt-Prepolymers beteiligten Ausgangsstoffe zwischen größer oder gleich 0,80 und kleiner oder gleich 0,98, bevorzugt zwischen größer oder gleich 0,85 und kleiner oder gleich 0,97, besonders bevorzugt zwischen größer oder gleich 0,90 und kleiner oder gleich 0,96 eingestellt wird. Die gewichtsgemittelten, mittleren Molmassen der erhaltenen Prepolymere liegen dann bei ca. 50000 bis 150000 g/mol. Dies ist ein Bereich, der eine problemlose Beschichtung als Hotmelt erlaubt, ohne dass merkliche, in den Verwendungen störende, unterschiedliche Eigenschaften des erhaltenen Films in Längs- und Querrichtung erzeugt werden.

Besonders vorteilhafte, für Haftklebeanwendungen geeignete viskoelastische Eigenschaften werden weiterhin erzielt, wenn die an der Bildung des hydroxyl-funktionalisierten Polyurethan-Hotmelt-Prepolymers beteiligten Polyole zu einem Gewichtsanteil von größer oder gleich 70 Gew.% Polyetherpolyole, bevorzugt Polypropylenglykole, sind.

Im Hinblick auf die Verwendung des hydroxyl-funktionalisierten Polyurethan-Hotmelt-Prepolymers als Schicht in einem Klebeband oder in einem selbstklebenden Artikel kann nach der Umsetzung mit Polyisocyanat ein vorteilhafter Vernetzungsgrad erreicht werden, wenn zuvor der anzahlmäßige Anteil der am molekularen Aufbau des hydroxyl-funktionalisierten Polyurethan-Hotmelt-Prepolymers beteiligten Moleküle mit einer Funktionalität von größer zwei mindestens 0,5 %, bevorzugt mindestens 2,0 % beträgt.

Generell sind Polyurethan-Prepolymere in der Herstellung Stand der Technik und beispielsweise im "Kunststoff-Handbuch, Polyurethane, Hrsg: Guenter Oertel, 3.Auflage, 88-103, (1993)" beschrieben.

Isocyanatreaktive Ausgangsstoffe zur Herstellung des hydroxyl-funktionalisierten Polyurethan-Hotmelt-Prepolymers können alle bekannten Polyole wie zum Beispiel Polyetherpolyole, insbesondere Polyethylenglykole oder Polypropylenglykole, Polyesterpolyole, Polycarbonatpolyole, Polytetramethylenglykolether (Polytetrahydrofurane), hydrierte und nicht hydrierte hydroxyl-funktionalisierte Polybutadien-Derivate, hydrierte und nicht hydrierte hydroxyl-funktionalisierte Polyisoprene, hydroxyl-funktionalisierte Polyisobutylene, hydroxyl-funktionalisierte Polyolefine, hydrierte und nicht hydrierte hydroxyl-funktionalisierte Kohlenwasserstoffe sein. Bevorzugte Polyole sind Polypropylenglykole. Als Polypropylenglykole können alle handelsüblichen Polyether auf Basis von Propylenoxid und eines difunktionellen Starters im Falle der Diole und eines trifunktionellen Starters im Falle der Triole eingesetzt werden. Darunter fallen sowohl die konventionell, d.h. im Regelfall mit einem basischen Katalysator, wie z.B. Kaliumhydroxid, hergestellten Polypropylenglykole, als auch die besonders reinen Polypropylenglykole, die DMC (Double metal cyanide)-katalysiert hergestellt werden, und deren Herstellung z.B. in US 5,712,216, US 5,693,584, WO 99/56874, WO 99/51661, WO 99/59719, WO 99/64152, US 5,952,261, WO 99/64493 und WO 99/51657 beschrieben wird. Charakteristisch an den DMC-katalysierten Polypropylenglykolen ist, dass die "nominale" bzw. theoretische Funktionalität von exakt 2 im Falle der Diole bzw. exakt 3 im Falle der Triole auch tatsächlich annähernd erreicht wird. Bei den konventionell hergestellten Polypropylenglykolen ist die "wahre" Funktionalität stets etwas geringer als die theoretische, und zwar insbesondere bei Polypropylenglykolen mit höherer Molmasse. Ursache ist eine Umlagerungs-Nebenreaktion des Propylenoxids zum Allylalkohol. Weiterhin können auch alle Polypropylenglykol-Diole bzw. -Triole eingesetzt werden, in denen Ethylenoxid mit einpolymerisiert ist, was in vielen handelsüblichen Polypropylenglykolen der Fall ist, um eine erhöhte Reaktivität gegenüber Isocyanaten zu erzielen.

Am Aufbau des hydroxyl-funktionalisierten Polyurethan-Hotmelt-Prepolymers können auch andere isocyanatreaktive Stoffe, wie zum Beispiel Polyetheramine beteiligt sein.

Generell werden in dieser Schrift unter isocyanatreaktiven Stoffen alle Stoffe mit aktivem Wasserstoff verstanden. Aktiver Wasserstoff ist definiert als an Stickstoff, Sauerstoff oder Schwefel gebundener Wasserstoff, der mit Methylmagnesiumiodid in Butylethern oder anderen Ethern unter Entstehung von Methan reagiert.

Kettenverlängerer im Sinne dieser Schrift sind alle gegenüber Isocyanaten reaktiven Verbindungen mit einer Funktionalität von kleiner oder gleich zwei und einer zahlengemittelten, mittleren Molmasse von kleiner oder gleich 500 g/mol. In der Regel sind es difunktionelle Verbindungen mit geringer Molmasse wie zum Beispiel 1,2-Ethandiol, 1,2-Propandiol, 1,3-Propandiol, 2-Methyl-1,3-Propandiol, 1,4-Butandiol, 2,3-Butandiol, Propylenglykol, Dipropylenglykol, 1,4-Cyclohexandimethanol, Hydrochinondihydroxyethylether, Ethanolamin, N-Phenyldiethanolamin, oder m-Phenylendiamin. Unter den Begriff Kettenverlängerer fallen aber auch die oben beschriebenen Polyole, insbesondere die Polypropylenglykole, sofern ihre Funktionalität kleiner oder gleich zwei ist und ihre zahlengemittelte, mittlere Molmasse kleiner oder gleich 500 g/mol beträgt.

Vernetzer können ebenfalls verwendet werden. Vernetzer sind niedermolekulare, gegenüber Isocyanaten reaktive Verbindungen mit einer Funktionalität größer als zwei. Beispiele für Vernetzer sind Glycerin, Trimethylolpropan, Diethanolamin, Triethanolamin und/oder 1,2,4-Butantriol.

Monofunktionelle, gegenüber Isocyanaten reaktive Stoffe, wie zum Beispiel Monoole können ebenfalls eingesetzt werden. Sie dienen als Kettenabbrecher und können somit zur Steuerung der Kettenlänge verwendet werden.

Als isocyanathaltige Ausgangsstoffe zur Herstellung des hydroxyl-funktionalisierten Polyurethan-Hotmelt-Prepolymers kommen zum Bespiel Isophorondiisocyanat, Hexamethylendiisocyanat, Dicyclohexylmethan-4,4'-diisocyanat, Toluylendiisocyanat, Diphenylmethan-4,4'-diisocyanat oder m-Tetramethyl-xylen-diisocyanat (TMXDI), Gemische der genannten Isocyanate oder chemisch daraus abgeleitete Isocyanate, zum Beispiel dimerisierte, trimerisierte oder polymerisierte Typen, die beispielsweise Harnstoff-, Uretdion- oder Isocyanuratgruppen enthalten, in Frage. Ein Beispiel für eine dimerisierte Type ist das HDI-Uretdion Desmodur N 3400® der Firma Bayer. Ein Beispiel für eine trimerisierte Type ist das HDI-Isocyanurat Desmodur N 3300®, ebenfalls von Bayer. Beispiele für aliphatische und cycloaliphatische Diisocyanate sind Isophorondiisocyanat, Hexamethylendiisocyanat oder Dicyclohexylmethan-4,4'-diisocyanat. Besonders bevorzugt sind Isophorondiisocyanat und Dicyclohexylmethan-4,4'-diisocyanat.

Um die Reaktion der isocyanatreaktiven Ausgangsstoffe mit dem zumindest einen isocyanathaltigen Ausgangsstoff zu beschleunigen, können ein oder mehrere dem Fachmann bekannten Katalysatoren wie zum Beispiel tertiäre Amine, bismut- oder zinnorganische Verbindungen eingesetzt werden, um nur einige zu nennen.
Sehr vorteilhaft können Bismut und Kohlenstoff enthaltende Katalysatoren eingesetzt werden, bevorzugt ein Bismutcarboxylat oder ein Bismutcarboxylat-Derivat.
Die Konzentration der Katalysatoren wird auf die verwendeten Polyisocyanate und Polyole sowie auf die angestrebte Verweilzeit im Mischaggregat und die Temperatur im Mischaggregat abgestimmt. Im Allgemeinen liegt sie zwischen 0,01 Gew.% und 0,5 Gew.% des herzustellenden chemisch vernetzten Polyurethanfilms.

In einer möglichen Ausführungsform enthält das hydroxyl-funktionalisiertes Polyurethan-Hotmelt-Prepolymer ein oder mehrere weitere Rezeptierungsbestandteile wie zum Beispiel Füllstoffe, Mikrokugeln, Harze, insbesondere klebrig machende Kohlenwasserstoffharze, Weichmacher, Alterungsschutzmittel (Antioxidantien), Lichtschutzmittel, UV-Absorber, rheologische Additive, sowie sonstige Hilfs- und Zusatzstoffe.

Als Füllstoffe können sowohl verstärkende, wie zum Beispiel Ruß, als auch nicht verstärkende, wie zum Beispiel Kreide oder Bariumsulfat, eingesetzt werden. Weitere Beispiele sind Talkum, Glimmer, pyrogene Kieselsäure, Silikate, Zinkoxid, Mikrovollglaskugeln, Mikrohohlglaskugeln und/oder Mikrokunststoffkugeln aller Art. Auch Mischungen der genannten Stoffe können eingesetzt werden.

Die Verwendung von Antioxidantien ist vorteilhaft, aber nicht zwingend notwendig.
Zu den geeigneten Antioxidantien zählen zum Beispiel sterisch gehinderte Phenole, Hydrochinon-Derivate, Amine, organische Schwefelverbindungen oder organische Phosphorverbindungen.
Lichtschutzmittel und UV-Absorber können optional ebenso eingesetzt werden.
Als Lichtschutzmittel finden zum Beispiel die bei Gaechter und Müller, Taschenbuch der Kunststoff-Additive, München 1979, bei Kirk-Othmer (3.) 23, 615 bis 627, bei Encycl. Polym. Sci. Technol. 14, 125 bis 148 und bei Ullmann (4.) 8, 21; 15, 529, 676 offenbarten Verbindungen Verwendung.

Beispiele für rheologische Additive, die optional zugesetzt werden können, sind pyrogene Kieselsäuren, Schichtsilikate (Bentonite), hochmolekulare Polyamidpulver oder Rizinusölderivat-Pulver.

Die zusätzliche Verwendung von Weichmachern ist ebenfalls möglich, sollte aber wegen ihrer starken Migrationstendenzen eher vermieden werden.

Die Herstellung des hydroxyl-funktionalisierten Polyurethan-Hotmelt-Prepolymers kann batchweise (also diskontinuierlich), zum Beispiel in einem beheizbaren Kneter, Planetenmischer oder Dissolver, oder kontinuierlich, zum Beispiel in einem Extruder oder mit Hilfe einer Zweikomponenten- Misch- und Dosieranlage erfolgen. Die Herstellung des hydroxyl-funktionalisierten Polyurethan-Hotmelt-Prepolymers kann auch in Teilschritten erfolgen, wobei auch Kombinationen der Mischverfahren möglich sind. Um Blasenfreiheit zu erreichen, wird das Mischen unter vermindertem Druck bevorzugt.

Gegenstand der Erfindung ist weiterhin die Verwendung des hydroxyl-funktionalisierten Polyurethan-Hotmelt-Prepolymers zur Herstellung von Polyurethanformkörpern und/oder Polyurethanschichten durch Umsetzung in der Schmelze mit einem oder mehreren Polyisocyanaten und Ausformung, wobei das Umsetzungsprodukt des Polyurethan-Hotmelt-Prepolymers mit dem Polyisocyanat beziehungsweise den Polyisocyanaten haftklebrige Eigenschaften besitzt.

Das erfindungsgemäße hydroxyl-funktionalisierte Polyurethan-Hotmelt-Prepolymer kann verwendet werden, um - insbesondere in kontinuierlicher Verfahrensführung - in der Schmelze (insbesondere also lösungsmittelfrei) mit einem oder mehreren mindestens difunktionellen Polyisocyanaten in einem Mischaggregat gemischt und somit - insbesondere kontinuierlich - chemisch umgesetzt zu werden, um schließlich einen chemisch vernetzten Polyurethanformkörper oder -film, insbesondere mit für Haftklebeanwendungen geeigneten viskoelastischen Eigenschaften, zu erhalten. Kontinuierlich bzw. kontinuierliche Verfahrensführung bedeutet, dass während des Mischens die zu mischenden Stoffe ständig und mit gleichmäßiger Geschwindigkeit dem Mischaggregat zugeführt, in dieses also eingebracht werden und die Mischung, in der die allmähliche chemische Umsetzung zum vernetzten Polymer voranschreitet, ständig und mit gleichmäßiger Geschwindigkeit das Mischaggregat an anderer Stelle verlässt. Im Mischaggregat findet somit während des Mischens ein ständiger, gleichmäßiger Fließvorgang und/oder Transportvorgang statt. Die Verweilzeit der Stoffe im Mischaggregat vom Einbringen bis zum Verlassen als chemisch reagierendes Gemisch (insbesondere also die Reaktionszeit des Polyurethan-Hotmelt-Prepolymers mit dem Polyisocyanat beziehungsweise den Polyisocyanaten vor der Ausformung) übersteigt bevorzugt nicht 10 Minuten und beträgt sehr bevorzugt 2 Sekunden bis 5 Minuten.

Die Funktionalität der Polyisocyanate, mit denen das erfindungsgemäße hydroxyl-funktionalisierte Polyurethan-Hotmelt-Prepolymer umgesetzt wird, und das Verhältnis der Gesamtanzahl der Isocyanat-Gruppen zur Gesamtanzahl der Hydroxyl- Gruppen der am molekularen Aufbau des somit durch die kontinuierlich fortschreitende chemische Umsetzung entstehenden Polymers werden vorzugsweise so eingestellt, dass der Film nach vollständiger Umsetzung chemisch vernetzt und somit nicht mehr schmelzbar ist. Im Regelfall wird ein NCO/OH-Verhältnis zwischen 1,0 und 1,1 gewählt. Ein NCO/OH-Verhältnis von größer 1,0, also ein NCO-Überschuss führt über eine Reaktion mit der praktisch allgegenwärtigen Umgebungsfeuchtigkeit zu einem Polymerkettenaufbau bzw. zu einer Vernetzung. Ein NCO/OH-Verhältnis von kleiner 1,0 kann insbesondere dann gewählt werden, wenn tri- oder höherfunktionelle Polyisocyanate verwendet werden. Geeignete Polyisocyanate sind alle mindestens difunktionellen Polyisocyanate. In Frage kommende Polyisocyanate sind zum Beispiel alle Polyisocyanate, die bei der Beschreibung der Polyisocyanate zur Herstellung des erfindungsgemäßen hydroxyl-funktionalisierten Polyurethan-Hotmelt-Prepolymers genannt wurden.

Das kontinuierliche Mischen des geschmolzenen, erfindungsgemäßen hydroxyl-funktionalisierten Polyurethan-Hotmelt-Prepolymers mit einem oder mehreren mindestens difunktionellen Polyisocyanaten erfolgt bevorzugt in einem kontinuierlich arbeitenden Mischaggregat, vorzugsweise in einem Extruder, insbesondere einem Doppelschnecken- oder einem Planetwalzenextruder, oder in einer beheizbaren Zweikomponenten-Misch- und Dosieranlage. Kaskadenschaltungen aus kontinuierlich oder auch diskontinuierlich arbeitenden Mischaggregaten sind ebenfalls geeignet. Das Mischaggregat ist vorzugsweise so konzipiert, dass bei einer kurzen Verweilzeit im Mischaggregat eine gute Durchmischung gewährleistet ist. Die Zugabe des geschmolzenen, erfindungsgemäßen, hydroxyl-funktionalisierten Polyurethan-Hotmelt-Prepolymers und der mindestens difunktionellen Polyisocyanate können in einem Extruder an gleicher Stelle oder auch an unterschiedlichen Stellen erfolgen, vorzugsweise in druckfreien Zonen. Günstig ist, wenn die mindestens difunktionellen Polyisocyanate fein verteilt dem erfindungsgemäßen hydroxyl-funktionalisierten Polyurethan-Hotmelt-Prepolymer zugesetzt werden, beispielsweise als Aerosol oder in feinen Tröpfchen.

Das erfindungsgemäße, hydroxyl-funktionalisierte Polyurethan-Hotmelt-Prepolymer kann auch in einer Zweikomponenten-Misch- und Dosieranlage beheizt und im geschmolzenen Zustand als Komponente A temperiert gefördert werden, während die mindestens difunktionellen Polyisocyanate als Komponente B gefördert werden. Die kontinuierliche Durchmischung erfolgt dann in einem dynamischen Mischkopf oder bevorzugt in einem Statik-Mischrohr oder einer Kombination aus dynamischem und statischem Mischverfahren.

Optional können während der kontinuierlichen Durchmischung des erfindungsgemäßen, hydroxyl-funktionalisierten Polyurethan-Hotmelt-Prepolymers in der Schmelze mit einem oder mehreren mindestens difunktionellen Polyisocyanaten weitere Rezeptierungsbestandteile wie zum Beispiel Füllstoffe, Mikrokugeln, Harze, insbesondere klebrig machende Kohlenwasserstoffharze, Weichmacher, Alterungsschutzmittel (Antioxidantien), Lichtschutzmittel, UV-Absorber, rheologische Additive, sowie sonstige Hilfs- und Zusatzstoffe zugemischt werden.

Während und nach der kontinuierlichen Durchmischung des erfindungsgemäßen hydroxyl-funktionalisierten Polyurethan-Hotmelt-Prepolymers in der Schmelze mit einem oder mehreren mindestens difunktionellen Polyisocyanaten schreitet die chemische Umsetzung zum vernetzten Polyurethan kontinuierlich voran. Die Reaktionsgeschwindigkeit ist unkatalysiert oder bei maßvoller Katalyse mit einem geeigneten Katalysator ausreichend langsam, so dass eine thermoplastische Verarbeitung noch eine Zeit lang möglich ist. Während dieser Zeit, die im Regelfall im Minutenbereich liegt, kann das kontinuierliche Ausformen der warmen oder heißen, chemisch reagierenden Mischung zu einem Film erfolgen. Nach dem Ausformen lässt man den Film auf Raumtemperatur abkühlen, wodurch er sich sofort, unabhängig vom Fortschritt der chemischen Vernetzungsreaktion verfestigt. Die Vernetzungsreaktion schreitet auch bei Raumtemperatur bis zum Erreichen der Vollständigkeit weiter voran. Die chemische Vernetzungsreaktion ist bei Raumtemperatur im Regelfall nach ein bis zwei Wochen vollständig abgeschlossen. Nach vollständiger Umsetzung ist das entstandene Polymer im Regelfall so vernetzt, dass es nicht mehr schmelzbar ist.

Das kontinuierliche Ausformen der warmen oder heißen, chemisch reagierenden Mischung erfolgt bevorzugt mittels eines Walzenauftrags oder einer Extrusionsdüse, kann aber auch mit anderen Auftragsverfahren, wie zum Beispiel einem Kommarakel erfolgen. Der ausgeformte Film wird kontinuierlich auf ein zulaufendes, bahnförmiges Trägermaterial aufgetragen und anschließend aufgewickelt. Das zulaufende, bahnförmige Trägermaterial kann zum Beispiel eine antiadhäsiv ausgerüstete Folie oder ein antiadhäsiv ausgerüstetes Papier sein. Es kann sich aber auch um ein mit einem Haftklebstoff oder einer Funktionsschicht vorbeschichtetes Material oder um einen Träger oder um beliebige Kombinationen der genannten bahnförmigen Materialien handeln.

Da das erfindungsgemäße, hydroxyl-funktionalisierte Polyurethan-Hotmelt-Prepolymer bereits Verzweigungen enthält, musste der Fachmann damit rechnen, dass nach Zudosierung des Polyisocyanats zu diesem Prepolymer in der Schmelze, also bei Temperaturen deutlich oberhalb Raumtemperatur, sofortige Gelierung einsetzt, sich also sofort vernetzte Strukturen ausbilden, die eine weitere Durchmischung und anschließende Beschichtung und Ausformung zum Film unmöglich machen. Dass dies nicht eintritt, war für den Fachmann nicht vorhersehbar.

Da durch die Hotmelt-Beschichtung die Aufwickelfähigkeit des Films nicht an das Voranschreiten einer chemischen Reaktion oder die Abdampfgeschwindigkeit eines Lösungsmittels gekoppelt ist, sondern nur an die Schnelligkeit der Abkühlung des Films gebunden ist, können sehr hohe Beschichtungsgeschwindigkeiten erzielt werden, was einen wirtschaftlichen Vorteil darstellt. Es entfallen außerdem die Kosten für die Beheizung einer Wärmekanalstrecke sowie die Kosten für eine Lösemittelverbrennung oder eine Lösemittelrückgewinnung. Da das erfindungsgemäße hydroxyl-funktionalisierte Polyurethan-Hotmelt-Prepolymer lösemittelfrei hergestellt werden kann, entstehen auch dort keine Kosten für eine Lösemittelverbrennung oder -rückgewinnung.

Durch die Möglichkeit der Lösemittelfreiheit können im Prinzip beliebig dicke Polymerfilme hergestellt werden, ohne dass es zur Blasen- oder Schaumbildung durch abdampfendes Lösungsmittel kommt.

Mit dem erfindungsgemäßen Verfahren können insbesondere sehr homogene (homogen vernetzte) dicke Schichten und homogen vernetzte dreidimensionale Formkörper hergestellt werden. Es lassen sich hervorragend homogene Schichtdicken von über 100 $\mu$m, auch über 200 $\mu$m darstellen.

Das vorstehend dargestellte Verfahren eignet sich insbesondere zur Herstellung viskoelastischer Klebebänder (Einschichtaufbauten oder auch Mehrschichtaufbauten, etwa mit zwei oder drei Schichten) mit Schichtdicken zwischen 100 $\mu$m und 10000 $\mu$m, bevorzugt zwischen 200 $\mu$m und 5000 $\mu$m, mehr bevorzugt zwischen 300 $\mu$m und 2500 $\mu$m.

Da das kontinuierliche Zumischen der die chemische Vernetzung herbeiführenden Polyisocyanate beziehungsweise des Polyisocyanats zum erfindungsgemäßen, hydroxyl-funktionalisierten Polyurethan-Hotmelt-Prepolymer erst kurz vor dem Ausformen der Mischung zum Film erfolgt, ist keine Blockierung reaktiver Gruppen und somit kein Einsatz von Blockierungsmitteln notwendig. Somit werden auch zu keinem Zeitpunkt im Film verbleibende und eventuell in der späteren Anwendung störende Blockierungsmittel freigesetzt.

Das erfindungsgemäße hydroxyl-funktionalisierte Polyurethan-Hotmelt-Prepolymer kann auch in einem Lösungsmittel oder einem Lösungsmittelgemisch hergestellt oder gelagert werden. Ebenso kann es in einem Lösungsmittel oder Lösungsmittelgemisch mit einem oder mehreren Polyisocyanaten umgesetzt werden und aus der Lösung heraus während des Beginns der Umsetzungsphase zwischen dem Prepolymer und den Polyisocyanaten beschichtet werden. Geeignete Lösungsmittel sind beispielsweise Methylethylketon, Aceton, Essigsäurebutylester, Dekalin oder Tetrahydrofuran.

Da die Vernetzung nicht von außen durch Strahlung wie zum Beispiel UV- oder ESH-Strahlung initiiert wird, wird ein Polymeraufbau mit durchgehend homogenen Eigenschaften auch dann erreicht, wenn der hergestellte Film sehr dick ist oder wenn der Film größere Mengen an Füllstoffen enthält. Füllstoffe sind in größeren Mengen von zum Beispiel 50 % und mehr einarbeitbar.

Dadurch, dass das erfindungsgemäße, hydroxyl-funktionalisierte Polyurethan-Hotmelt-Prepolymer in aller Regel eine verglichen mit vielen anderen thermoplastisch verarbeitbaren Polymeren geringe gewichtsgemittelte mittlere Molmasse hat, ist es bei vergleichsweise niedrigen Temperaturen schmelzbar und thermoplastisch verarbeitbar. Während und nach dem Ausformen der Schmelze zu einem Film kommt es in aller Regel nicht zu klebtechnisch relevanten Unterschieden des Films in Längs- und Querrichtung.

Überraschend und auch für den Fachmann nicht vorhersehbar wird durch die Verzweigung des erfindungsgemäßen, hydroxyl-funktionalisierten Polyurethan-Hotmelt-Prepolymers die Erzeugung vernetzter Polymerstrukturen mit gleichzeitig fließfähigen Anteilen ermöglicht. Derartige Polymerstrukturen führen zu viskoelastischen Eigenschaften, wie sie im Klebebandbereich zur Erzielung hoher Klebkräfte bei gleichzeitig hohen Scherfestigkeiten benötigt werden. Ein gewisses Maß an viskosem Fließen ist bekanntlich zum Aufbau von Haftung (Adhäsion) an zu verklebenden Substraten stets notwendig. Ebenso ist ein gewisses Maß an elastischen Rückstellkräften (Kohäsion) notwendig, um Scherbeanspruchungen, insbesondere in der Wärme, widerstehen zu können. Vorteilhafte Haftklebeeigenschaften können nicht nur dann erzielt werden, wenn die Haftklebstoffschicht entsprechend viskoelastisch konzipiert ist, sondern auch, wenn dies für die anderen Schichten eines Klebebandes, wie zum Beispiel die Trägerschicht oder eine Primerschicht zutrifft. Unverzweigte Hotmelt-Prepolymere führen dagegen nach einer Vernetzung entweder zu Polymerstrukturen mit besonders elastischem Charakter ohne nennenswerte fließfähige Anteile oder aber zu Polymerstrukturen mit sehr hohen fließfähigen Anteilen und sehr geringen elastischen Anteilen. Ein für Haftklebeanwendungen geeignetes Maß wäre so nur unzureichend zu treffen. Polymere mit zu elastischem Charakter fließen nur in sehr geringem Maße auf Substrate auf, entwickeln also nur geringe Adhäsionskräfte. Werden unverzweigte Hotmelt-Prepolymere wiederum nur geringfügig oder gar nicht vernetzt, haben sie also einen zu geringen elastischen Charakter, resultieren sehr geringe Kohäsionskräfte.

Das erfindungsgemäße hydroxyl-funktionalisierte Polyurethan-Hotmelt-Prepolymer kann auch mit lediglich difunktionellen Isocyanaten vorteilhaft vernetzt werden.

Anhand der folgenden Beispiele soll die Erfindung näher beschrieben werden, ohne die Erfindung damit einschränken zu wollen.

Die folgenden Prüfmethoden wurden eingesetzt, um die erfindungsgemäß hergestellten Muster kurz zu charakterisieren:

Dynamisch Mechanische Analyse (DMA) zur Bestimmung des Speichermoduls G' und des Verlustmoduls G"

Zur Charakterisierung der hydroxyl- funktionalisierten Polyurethan-Hotmelt-Prepolymere erfolgten Bestimmungen des Speichermoduls G' und des Verlustmoduls G" mittels Dynamisch Mechanischer Analyse (DMA).

Die Messungen erfolgten mit dem schubspannungsgesteuerten Rheometer DSR 200 N der Firma Rheometric Scientific im Oszillationsversuch bei einer sinusförmig oszillierenden Scherbeanspruchung in einer Platte-Platte-Anordnung. Der Speichermodul G' und der Verlustmoduls G" wurden im Frequenzsweep von $10^{-1}$ bis $10^{2}$ rad/sec bei einer Temperatur von 25 °C bestimmt. G' und G" sind folgendermaßen definiert:

G' = $\tau/\gamma$ •cos($\delta$) ($\tau$ = Schubspannung, $\gamma$ = Deformation, $\delta$ = Phasenwinkel = Phasenverschiebung zwischen Schubspannungs- und Deformationsvektor).

G" = $\tau/\gamma$ •sin($\delta$) ($\tau$ = Schubspannung, $\gamma$ = Deformation, $\delta$ = Phasenwinkel = Phasenverschiebung zwischen Schubspannungs- und Deformationsvektor).

Die Definition der Winkelfrequenz lautet: $\omega$ = 2$\pi$ • f (f = Frequenz). Die Einheit ist rad/sec.

Die Dicke der gemessenen Proben betrug stets zwischen 0,9 und 1,1 mm (1 ± 0,1 mm). Der Probendurchmesser betrug jeweils 25 mm. Die Vorspannung erfolgte mit einer Belastung von 3N. Der Stress der Probenkörper betrug bei allen Messungen 2500 Pa.

Dynamisch Mechanische Analyse (DMA) zur Bestimmung der komplexen Viskosität ($\eta$*)

Zur Charakterisierung der hydroxyl- funktionalisierten Polyurethan-Hotmelt-Prepolymere erfolgten weiterhin Bestimmungen der komplexen Viskosität mittels Dynamisch Mechanischer Analyse (DMA).

Die Messungen erfolgten mit dem schubspannungsgesteuerten Rheometer DSR 200 N der Firma Rheometric Scientific im Oszillationsversuch bei einer sinusförmig oszillierenden Scherbeanspruchung in einer Platte-Platte-Anordnung. Die komplexe Viskosität wurde im Temperatursweep von -50 °C bis +250 °C bei einer Oszillationsfrequenz von 10 rad/s bestimmt. Die komplexe Viskosität $\eta$* ist folgendermaßen definiert: $\eta$* = G* / $\omega$

(G* = komplexer Schubmodul, $\omega$ = Winkelfrequenz).

Die weiteren Definitionen lauten: $G^{*} = \sqrt{(G')^{2} + (G'')^{2}}$ (G" = Viskositätsmodul (Verlustmodul), G' = Elastizitätsmodul (Speichermodul)).

G" = $\tau/\gamma$ •sin($\delta$) ($\tau$ = Schubspannung, $\gamma$ = Deformation, $\delta$ = Phasenwinkel = Phasenverschiebung zwischen Schubspannungs- und Deformationsvektor).

G' = $\tau/\gamma$ •cos($\delta$) ($\tau$ = Schubspannung, $\gamma$ = Deformation, $\delta$ = Phasenwinkel = Phasenverschiebung zwischen Schubspannungs- und Deformationsvektor).

$\omega$ = 2$\pi$ • f (f = Frequenz).

Die Dicke der gemessenen Proben betrug stets zwischen 0,9 und 1,1 mm (1 ± 0,1 mm). Der Probendurchmesser betrug jeweils 25 mm. Die Vorspannung erfolgte mit einer Belastung von 3N. Der Stress der Probenkörper betrug bei allen Messungen 2500 Pa.

Bestimmung der Zugeigenschaften im Zugdehnungsversuch

Die 0,9 bis 1,1 mm dicken Proben wurden nach einer Lagerzeit von zwei Wochen bei Raumtemperatur in Längsrichtung (Ausformungsrichtung) und in Querrichtung (Richtung in einem Winkel von 90° zur Ausformungsrichtung in der Filmebene) hinsichtlich ihrer Zugdehnungseigenschaften untersucht.
Die Messungen erfolgten gemäß DIN EN ISO 527-1 bis 3 mit den Normprüfkörpern der Größe 5A bei einer Prüfgeschwindigkeit von 300 mm/min. Gemessen wurden die Zugfestigkeit und die zugehörige Dehnung. Die Zugfestigkeit ist die maximal gemessene Kraft beim Dehnen des Prüfmaterials, dividiert durch die Anfangsquerschnittsfläche der Probe und wird in der Einheit $N/mm^2$ angegeben. Die Dehnung bei der Zugfestigkeit ist die auf die ursprüngliche Messlänge des Prüfstreifens bezogene Längenänderung bei maximaler gemessener Kraft und wird in der Einheit % angegeben.

Bestimmung des Relaxationsverhaltens

Die 0,9 bis 1,1 mm dicken Proben wurden nach einer Lagerzeit von zwei Wochen bei Raumtemperatur in Längsrichtung (Ausformungsrichtung) und in Querrichtung (Richtung in einem Winkel von 90° zur Ausformungsrichtung in der Filmebene) hinsichtlich ihres Relaxationsverhaltens untersucht. Die Untersuchungen des Relaxationsverhaltens erfolgten ebenfalls im Zugdehnungsversuch in Anlehnung an DIN EN ISO 527-1 bis 3 mit Normprüfkörpern der Größe 5A. Bei einer Prüfgeschwindigkeit von 100 mm/min wurde das Prüfmaterial 50 % in Längsrichtung, bezogen auf die ursprüngliche Länge des Prüfstreifens, gedehnt. Die zugehörige Spannung wurde im Augenblick des Erreichens der Dehnung von 50 % gemessen. Die Spannung ist definiert als die Zugkraft am Probekörper, bezogen auf die Anfangsquerschnittsfläche innerhalb der Messlänge. Die Dehnung von 50 % wurde weiter auf recht erhalten. Nach einer Zeit von fünf Minuten wurde die Spannung erneut bestimmt. Die prozentuale Abnahme der Spannung ist die Relaxation:

$$\text{Relaxation} = 100 \cdot (\text{Anfangsspannung} - \text{Endspannung}) / \text{Anfangsspannung}.$$

Gelpermeationschromatografie (GPC)

Zur Charakterisierung der hydroxyl- funktionalisierten Polyurethan-Hotmelt-Prepolymere erfolgten Bestimmungen der zahlengemittelten und der gewichtsgemittelten mittleren Molmassen mittels Gelpermeationschromatografie (GPC). Die Messungen wurden bei der Firma Polymer Standards Service in Mainz ausgeführt.
Die Kalibrierung erfolgte mit Poly(methyl-methacrylat) universell. Die Bestimmungen erfolgten nach der Analysenmethode AM 1005. Als Eluent wurde THF / 0,1 Vol.% Trifluoressigsäure (TFAc) verwendet. Als Vorsäule wurde PSS-SDV, 10 µm, ID 8.0 mm x 50 mm eingesetzt und als Säule PSS-SDV, 10 µm linear one, ID 8.0 mm x 300 mm. Gepumpt wurde mit einer TSP P 100. Der Fluss betrug 0,5 ml/min. Die Probenkonzentration betrug ca. 1,5 g/l. Beim Injektionssystem handelte es sich um ein TSP AS 3000. Das Injektionsvolumen betrug 100 µl. Gemessen wurde bei 23 °C. Beim Detektor handelte es sich um einen Shodex RI 71. Die Auswertung erfolgte mit dem Programm PSS-WinGPC Unity Version 7.20.

Klebkraft

Die Klebkraft wurde nach PSTC-101 bestimmt. Nach dieser Methode wird der zu messende Klebstreifen auf den Haftgrund (Stahl) aufgebracht, zweimal mit einem 2kg-Gewicht aufgedrückt und anschließend unter definierten Bedingungen mittels einer Zugprüfmaschine abgezogen. Der Abzugswinkel betrug 90° oder 180°, die Abzugsgeschwindigkeit 300 mm/min. Die zum Abziehen erforderliche Kraft ist die Klebkraft, welche in der Einheit N/cm angegeben wird. Die gemessenen Klebstreifen waren mit einer 25 µm dicken Polyesterfolie rückseitenverstärkt.

Schertest

Der Schertest erfolgte nach der Prüfvorschrift PSTC-107. Nach dieser Methode wurde der zu messende Klebstreifen auf den Haftgrund (Stahl) aufgebracht, viermal mit einem 2kg-Gewicht aufgedrückt und anschließend einer konstanten Scherbelastung ausgesetzt. Ermittelt wird die Haltedauer in Minuten.
Die Verklebungsfläche betrug jeweils 13 x 20 $mm^2$. Die Scherbelastung dieser Verklebungsfläche betrug 1 kg. Die Messung erfolgte bei Raumtemperatur (23 °C). Die gemessenen Klebstreifen waren mit einer 25 µm dicken Polyesterfolie rückseitenverstärkt.
Die hydroxyl-funktionalisierten Polyurethan-Hotmelt-Prepolymere wurden in einem üblichen beheiz- und evakuierbaren Mischkessel mit Dissolver-Rührwerk der Firma Molteni gefertigt. Während des jeweils ca. zweistündigen Mischvorgangs wurde die Temperatur der Mischung auf ca. 70 °C bis 100 °C eingestellt. In den Fällen, in denen lösungsmittelfrei gearbeitet wurde, wurde zur Entgasung der Komponenten Vakuum angelegt.

Das Umsetzen der erfindungsgemäßen hydroxyl-funktionalisierten Polyurethan-Hotmelt-Prepolymere mit einem oder mehreren Polyisocyanaten erfolgte in den Fällen, in denen das hydroxyl-funktionalisierte Polyurethan-Hotmelt-Prepolymer in seiner Funktion als Hotmelt verwendet wurde, in einem Doppelschneckenextruder der Firma Leistritz, Deutschland, Bez LSM 30/34. Das Aggregat wurde von außen auf ca. 70 °C bis 90 °C elektrisch beheizt und über verschiedene Gebläse luftgekühlt und war so konzipiert, dass eine gute Durchmischung von Prepolymer und Polyisocyanat bei kurzer Verweilzeit im Extruder gewährleistet war. Dazu wurden die Mischwellen des Doppelschneckenextruders so angeordnet, dass sich fördernde und mischende Elemente abwechselten. Die Zugabe des jeweiligen Polyisocyanats erfolgte mit geeignetem Dosierequipment unter Verwendung von Dosierhilfsmitteln in die druckfreien Förderzonen des Doppelschneckenextruders.

Nach Austritt der chemisch reagierenden, ca. 80 °C heißen Mischung aus dem Doppelschneckenextruder (Austritt: Runddüse 5 mm Durchmesser) erfolgte die Ausformung zum Film direkt mittels eines nachgeschalteten Zweiwalzenauftragswerks zwischen zwei zulaufenden, beidseitig silikonisierten 50 $\mu$m dicken Polyesterfolien. Die Zulaufgeschwindigkeit wurde zwischen 1 m/min und 20 m/min variiert. Eine der zulaufenden, beidseitig silikonisierten Polyesterfolien wurde nach Abkühlung des Films und damit Verfestigung sofort wieder ausgedeckt. Somit lag nun ein aufwickelbarer Film vor.

Ein Teil der auf sililkonisierter Polyesterfolie vorliegenden aufgewickelten Filme wurde nach zwei Wochen Lagerzeit bei Raumtemperatur wieder abgewickelt und gegen den auf silikonisierter Polyesterfolie in einer Dicke von 50 $\mu$m fertig ausgestrichen vorliegenden Polyacrylat-Haftklebstoff Durotac 280-1753 der Firma National Starch kaschiert. Die Kaschierung erfolgte ohne weitere Vorbehandlung. Die Versuche mit dem Polyacrylat-Haftklebstoff dienten der Erprobung der Verwendung als Träger- oder als Funktionsschicht in einem Klebeband.

In einem Teil der Versuche wurden die erfindungsgemäßen, hydroxyl-funktionalisierten Polyurethan-Hotmelt-Prepolymere vor der Verwendung in Aceton aufgelöst. Der Anteil an Aceton betrug dabei stets 40 Gew.%. Das Umsetzen der erfindungsgemäßen hydroxyl-funktionalisierten Polyurethan-Hotmelt-Prepolymere mit einem oder mehreren Polyisocyanaten erfolgte dann in einem üblichen beheiz- und evakuierbaren Mischkessel mit Dissolver-Rührwerk der Firma Molteni bei Raumtemperatur. Die Mischzeit betrug 15 bis 30 Minuten. Eine solche chemisch reagierende Mischung aus einem hydroxyl-funktionalisierten Polyurethan-Hotmelt-Prepolymer mit einem oder mehreren Polyisocyanaten in Aceton war bei Katalysator-Gehalten zwischen 0,05 % und 0,2 % in der Regel ungefähr 24 bis 48 Stunden beschichtbar, bis es zur allmählichen Gelierung kam.

In Tabelle 1 sind die zur Herstellung des chemisch vernetzten Polyurethan-Films verwendeten Basismaterialien aufgeführt, und zwar jeweils mit Handelsnamen und Hersteller. Die genannten Rohstoffe sind alle frei im Handel erhältlich.

Tabelle 1: Zur Herstellung der chemisch vernetzten Polyurethan-Filme eingesetzte Basismaterialien

| Handelsname | Chemische Basis | mittlere zahlengemittelte Molmasse $M_n$ (g/mol) | OH- bzw. NCO-Zahl (mmol OH/kg bzw. mmol NCO/kg | Hersteller / Lieferant |
|---|---|---|---|---|
| Voranol P 400 ® | Polypropylenglykol, Diol | 400 | 4643 | Dow |
| Voranol 1010L ® | Polypropylenglykol, Diol | 1000 | 1961 | Dow |
| Voranol 2000L ® | Polypropylenglykol, Diol | 2000 | 989 | Dow |
| Voranol CP 1055 ® | Polypropylenglykol, Triol | 1000 | 2781 | Dow |
| Voranol CP 3355 ® | Polypropylenglykol, Triol | 3500 | 847 | Dow |
| Voranol CP 6055 ® | Polypropylenglykol, Triol | 6000 | 491 | Dow |
| MPDiol ® | 2-Methyl-1,3-propandiol | 90,12 | 22193 | Lyondell |
| Ethylenglykol | Ethylenglykol | 62,07 | 32222 | Aldrich |
| Lutensol AO7 ® | ethoxylierter $C_{13}C_{15}$ - Oxoalkohol | 520 | 1961 | BASF |

(fortgesetzt)

| Handelsname | Chemische Basis | mittlere zahlengemittelte Molmasse $M_n$ (g/mol) | OH- bzw. NCO-Zahl (mmol OH/kg bzw. mmol NCO/kg | Hersteller / Lieferant |
|---|---|---|---|---|
| Vestanat IPDI ® | Isophorondiisocyanat (IPDI) | 222,3 | 8998 | Degussa |
| Desmodur W ® | Dicyclohexylmethandiisocyanat (HMDI) | 262 | 7571 | Bayer |
| Tinuvin 292 ® | sterisch gehindert. Amin, Licht- und Alterungsschutzmittel | | | Ciba |
| Tinuvin 400 ® | Triazin-Derivat, UV-Schutzmittel | | | Ciba |
| Coscat 83 ® | Bismuttrisneodecanoat CAS-Nr. 34364-26-6 | | | Caschem |
| Mark DBTL ® | Dibutylzinndilaurat | | | Nordmann, Rassmann |
| Aerosil R 202 ® | Pyrogene Kieselsäure, hydrophobiert | | | Evonik |
| Expancel 092 DETX 100 d25® | Vorexpandierte Mikrosphären, durchschnittliche Partikelgröße 100 $\mu$m, Dichte: 25 kg/m$^3$ | | | Akzo Nobel |

**Beispiele**

**Beispiel 1**

Das hydroxyl-funktionalisierte Polyurethan-Hotmelt-Prepolymer wurde durch homogenes Mischen und somit chemisches Umsetzen der folgenden Ausgangsstoffe in den angegebenen Mengenverhältnissen hergestellt:

Tabelle 2: Zusammensetzung des hydroxyl-funktionalisierten Polyurethan-Hotmelt-Prepolymers, Beispiel 1

| Ausgangsstoff | Gewichtsanteil (Gew.%) | Prozentuales Verhältnis der Anzahl der OH-Gruppen zueinander | Prozentuales Verhältnis der Anzahl der OH-Gruppen tragenden Moleküle zueinander (idealisiert)* | Prozentuales Verhältnis der Anzahl aller funktionalisierten Moleküle zueinander (idealisiert)* |
|---|---|---|---|---|
| Voranol P 400 | 21,7 | 42,0 | 43,4 | 22,5 |
| Voranol CP 6055 | 48,9 | 10,0 | 6,9 | 3,6 |
| MP Diol | 5,2 | 48,0 | 49,7 | 25,7 |
| Coscat 83 | 0,1 | | | |
| Vestanat IPDI | 24,1 | | | 48,2 |
| Summe | 100,0 | 100,0 | 100.0 | 100,0 |
| *errechnet aus den Gewichtsanteilen und den OH-Zahlen beziehungsweise NCO-Zahlen der Ausgangsstoffe unter der stark idealisierten Annahme, dass das Voranol P400 exakt die Funktionalität 2 hat und das Voranol CP 6055 exakt die Funktionalität 3 hat. | | | | |

Zunächst wurden alle aufgeführten Ausgangsstoffe außer dem MP Diol und dem Vestanat IPDI bei einer Temperatur von 70 °C und einem Druck von 100 mbar 1,5 Stunden gemischt. Sodann wurde das MP Diol 15 Minuten lang zugemischt und anschließend das Vestanat IPDI, ebenfalls während einer Dauer von 15 Minuten. Durch die entstandene Reaktionswärme erwärmte sich die Mischung auf 100 °C und wurde nun in Vorratsbehälter abgefüllt.

Das NCO/OH-Verhältnis betrug 0,90. Der theoretische Gelpunkt errechnet sich zu 0,91. 10,0 % der zur Bildung des hydroxyl-funktionalisierten Polyurethan-Hotmelt-Prepolymers eingebrachten Hydroxylgruppen stammen von einem Polypropylenglykol mit einer Funktionalität von größer zwei und einer zahlengemittelten Molmasse von 6000 g/mol. Somit sind ca. 6,9 % der OH-Gruppen tragenden Ausgangsstoffmoleküle trifunktionell. Insgesamt sind bei idealisierter Betrachtung 3,6 % der am molekularen Aufbau des hydroxyl-funktionalisierten Polyurethan-Hotmelt-Prepolymers beteiligten Moleküle trifunktionell und somit zur Bildung verzweigter Strukturen befähigt.

96,4 % der am molekularen Aufbau des hydroxyl-funktionalisierten Polyurethan-Hotmelt-Prepolymers beteiligten Moleküle haben eine relative Molmasse von kleiner oder gleich 1000 (bei idealisierter Betrachtung).

Das entstandene Prepolymer war bei Raumtemperatur fest und von der Konsistenz her gummiartig und eigenklebrig (haftklebrig). Die komplexe Viskosität $\eta^*$ betrug bei Raumtemperatur (23 °C) 18000 Pas und bei 70 °C 210 Pas. Die gewichtsgemittelte mittlere Molmasse $M_W$ betrug 120000 g/mol, die zahlengemittelte mittlere Molmasse $M_N$ 17600 g/mol.

Das entstandene Prepolymer war schmelzbar.

Für einen Teil der Versuche wurde es in Aceton gelöst.

Verwendung:

Zur Herstellung eines Haftklebstofffilms wurde das in Aceton gelöste Prepolymer bei Raumtemperatur auf eine 25 $\mu$m dicken Polyesterfolie beschichtet. Das Lösungsmittel wurde bei 70 °C abgedampft. Es wurde eine 50 $\mu$m dicke Schicht erhalten.

Zur Herstellung eines chemisch vernetzten Haftklebstoffs wurde das in Aceton gelöste Prepolymer bei Raumtemperatur mit Vestanat IPDI gemischt. Das Mischungsverhältnis betrug 100 Gewichtsteile Prepolymer : 3,99 Gewichtsteile Vestanat IPDI. Das Gesamt-NCO/OH-Verhältnis aus allen bis dahin eingeflossenen NCO- und OH-Gruppen betrug somit 1,05. Die Mischung wurde auf eine 25 $\mu$m dicken Polyesterfolie beschichtet. Das Lösungsmittel wurde bei 70 °C abgedampft. Es wurde eine 50 $\mu$m dicke Schicht erhalten.

Zur Herstellung eines chemisch vernetzten Klebebandträgers wurde das Prepolymer einem auf 80 °C vorgeheizten Doppelschneckenextruder kontinuierlich zugeführt. Das Polyisocyanat wurde gleichzeitig und an gleicher Stelle dem Doppelschneckenextruder kontinuierlich zudosiert. Als zudosiertes Polyisocyanat fand Desmodur W (Dicyclohexylmethandiisocyanat) Verwendung.

Es wurde wieder ein Gesamt-NCO/OH-Verhältnis von 1,05 eingestellt.

Somit betrugen die Mischungsverhältnisse:

100 Gewichtsteile Prepolymer : 4,54 Gewichtsteile Desmodur W.

Es wurde kontinuierlich gemischt und gefördert. Die Zeit bis zum Austritt des Extrudats aus dem Extruder betrug ca. zwei Minuten.

Das Extrudat wurde direkt einem Zweiwalzenauftragswerk zugeführt und dort zwischen zwei zulaufenden, beidseitig silikonisierten Polyesterfolien beschichtet und somit zu einem Film ausgeformt. Die Dicke des Films betrug 1,0 mm. Der Film wurde nach Abkühlung auf Raumtemperatur aufgewickelt, nachdem zuvor eine der beiden silikonisierten Polyesterfolien entfernt wurde. Der aufgewickelte Film wurde zwei Wochen bei Raumtemperatur gelagert.

Anschließend wurde er zum Teil wieder abgewickelt und gegen den auf silikonisierter Polyesterfolie in einer Dicke von 50 $\mu$m fertig ausgestrichen vorliegenden Polyacrylat-Haftklebstoff Durotac 280-1753 der Firma National Starch kaschiert. Die Kaschierung erfolgte ohne irgendeine Vorbehandlung. Die Versuche mit dem Polyacrylat-Haftklebstoff dienten der Erprobung der Verwendung als Träger- oder als Funktionsschicht in einem Klebeband.

Die Prüfergebnisse (Beispiel 1) sind in der folgenden Tabelle zusammenefasst:

Tabelle 3: Prüfergebnisse, Beispiel 1

| | hydroxyl-funktionalisiertes Polyurethan-Hotmelt-Prepolymer | Prepolymer nach Umsetzung (Vernetzung) in Lösung mit IPDI | Prepolymer nach Umsetzung (Vernetzung) in der Schmelze mit Desmodur W | Prepolymer nach Vernetzung und Kaschierung gegen den Polyacrylat-Haftklebstoff Durotac280-1753 |
|---|---|---|---|---|
| G' (bei 1 rad /sec und 25 °C) (Pa) | 11000 | 110000 | 120000 | |
| G" (bei 1 rad /sec und 25 °C) | 30000 | 90000 | 90000 | |

(fortgesetzt)

| | hydroxyl-funktionalisiertes Polyurethan-Hotmelt-Prepolymer | Prepolymer nach Umsetzung (Vernetzung) in Lösung mit IPDI | Prepolymer nach Umsetzung (Vernetzung) in der Schmelze mit Desmodur W | Prepolymer nach Vernetzung und Kaschierung gegen den Polyacrylat-Haftklebstoff Durotac280-1753 |
|---|---|---|---|---|
| G' (bei 10 rad /sec und 25 °C) | 80000 | 320000 | 360000 | |
| G" (bei 10 rad /sec und 25 °C) | 140000 | 190000 | 200000 | |
| Zugfestigkeit längs (N/mm²) | 0,1 | 0,9 | 1,2 | |
| Zugfestigkeit quer (N/mm²) | 0,1 | 0,9 | 1,2 | |
| Dehnung längs (%) | >1000 | 630 | 580 | |
| Dehnung quer (%) | >1000 | 670 | 570 | |
| Relaxation längs (%) | >90 | 55 | 51 | |
| Relaxation quer (%) | >90 | 57 | 50 | |
| Klebkraft, Stahl 300 mm/min (N/cm) | 11,6 (Abzugswinkel : 180°) | 5,3 (Abzugswinkel: 180°) | 4,8 (Abzugswinkel: 180°) | 18,3 (Abzugswinkel : 90°) |
| Haltezeit im Schertest bei Raumtemperatur, Belastung 1 kg, (min) | 11 | 7500 | >10000 | >10000 |

Die Klebkraft des Haftklebstoffs Durotac280-1753, aufgetragen als 50 $\mu$m dicke Schicht auf eine 25 $\mu$m dicke Polyesterfolie, betrug zum Vergleich 5,9 N/cm.

**Beispiel 2**

Das hydroxyl-funktionalisierte Polyurethan-Hotmelt-Prepolymer wurde durch homogenes Mischen und somit chemisches Umsetzen der folgenden Ausgangsstoffe in den angegebenen Mengenverhältnissen hergestellt:

Tabelle 4: Zusammensetzung des hydroxyl-funktionalisierten Polyurethan-Hotmelt-Prepolymers, Beispiel 2

| Ausgangsstoff | Gewichtsanteil (Gew.%) | Prozentuales Verhältnis der Anzahl der OH-Gruppen zueinander | Prozentuales Verhältnis der Anzahl der OH-Gruppen tragenden Moleküle zueinander (idealisiert)* | Prozentuales Verhältnis der Anzahl aller funktionalisierten Moleküle zueinander (idealisiert)* |
|---|---|---|---|---|
| Voranol P 400 | 50,8 | 87,8 | 88,5 | 44,8 |
| Voranol CP 6055 | 13,6 | 2,5 | 1,7 | 0,8 |
| MP Diol | 1,2 | 9,7 | 9,8 | 5,0 |
| Coscat 83 | 0,1 | | | |
| Desmodur W | 34,3 | | | 49,4 |

(fortgesetzt)

| Ausgangsstoff | Gewichtsanteil (Gew.%) | Prozentuales Verhältnis der Anzahl der OH-Gruppen zueinander | Prozentuales Verhältnis der Anzahl der OH-Gruppen tragenden Moleküle zueinander (idealisiert)* | Prozentuales Verhältnis der Anzahl aller funktionalisierten Moleküle zueinander (idealisiert)* |
|---|---|---|---|---|
| Summe | 100,00 | 100,00 | 100.00 | 100,0 |

*errechnet aus den Gewichtsanteilen und den OH-Zahlen bzw. NCO-Zahlen der Ausgangsstoffe unter der stark idealisierten Annahme, dass das Voranol P400 exakt die Funktionalität 2 hat und das Voranol CP 6055 exakt die Funktionalität 3 hat.

Zunächst wurden alle aufgeführten Ausgangsstoffe außer dem MP Diol und dem Desmodur W bei einer Temperatur von 70 °C und einem Druck von 100 mbar 1,5 Stunden gemischt. Sodann wurde das MP Diol 15 Minuten lang zugemischt und anschließend das Desmodur W, ebenfalls während einer Dauer von 15 Minuten. Durch die entstandene Reaktionswärme erwärmte sich die Mischung auf 100 °C und wurde nun in Vorratsbehälter abgefüllt.

Das NCO/OH-Verhältnis betrug 0,97. Der theoretische Gelpunkt errechnet sich zu 0,98. 2,5 % der zur Bildung des hydroxyl-funktionalisierten Polyurethan-Hotmelt-Prepolymers eingebrachten Hydroxylgruppen stammen von einem Polypropylenglykol mit einer Funktionalität von größer zwei und einer zahlengemittelten Molmasse von 6000 g/mol. Somit sind ca. 1,7 % der OH-Gruppen tragenden Ausgangsstoffmoleküle trifunktionell. Insgesamt sind bei idealisierter Betrachtung 0,8 % der am molekularen Aufbau des hydroxyl-funktionalisierten Polyurethan-Hotmelt-Prepolymers beteiligten Moleküle trifunktionell und somit zur Bildung verzweigter Strukturen befähigt. 99,2 % der am molekularen Aufbau des hydroxyl-funktionalisierten Polyurethan-Hotmelt-Prepolymers beteiligten Moleküle haben eine relative Molmasse von kleiner oder gleich 1000 (bei idealisierter Betrachtung).

Das entstandene Prepolymer war bei Raumtemperatur fest und von der Konsistenz her gummiartig und eigenklebrig (haftklebrig). Die komplexe Viskosität $\eta^*$ betrug bei Raumtemperatur (23 °C) 54000 Pas und bei 70 °C 265 Pas. Die gewichtsgemittelte mittlere Molmasse $M_W$ betrug 100000 g/mol, die zahlengemittelte mittlere Molmasse $M_N$ 15600 g/mol.

Das entstandene Prepolymer war schmelzbar.

Für einen Teil der Versuche wurde es in Aceton gelöst.

Verwendung:

Zur Herstellung eines Haftklebstofffilms wurde das in Aceton gelöste Prepolymer bei Raumtemperatur auf eine 25 $\mu$m dicken Polyesterfolie beschichtet. Das Lösungsmittel wurde bei 70 °C abgedampft. Es wurde eine 50 $\mu$m dicke Schicht erhalten.

Zur Herstellung eines chemisch vernetzten Haftklebstoffs wurde das in Aceton gelöste Prepolymer bei Raumtemperatur mit Vestanat IPDI gemischt. Das Mischungsverhältnis betrug 100 Gewichtsteile Prepolymer : 2,51 Gewichtsteile Vestanat IPDI. Das Gesamt-NCO/OH-Verhältnis aus allen bis dahin eingeflossenen NCO- und OH-Gruppen betrug somit 1,05. Die Mischung wurde auf eine 25 $\mu$m dicken Polyesterfolie beschichtet. Das Lösungsmittel wurde bei 70 °C abgedampft. Es wurde eine 50 $\mu$m dicke Schicht erhalten.

Zur Herstellung eines chemisch vernetzten Klebebandträgers wurde das Prepolymer einem auf 80 °C vorgeheizten Doppelschneckenextruder kontinuierlich zugeführt. Das Polyisocyanat wurde gleichzeitig und an gleicher Stelle dem Doppelschneckenextruder kontinuierlich zudosiert. Als zudosiertes Polyisocyanat fand Vestanat IPDI Verwendung. Es wurde wieder ein Gesamt-NCO/OH-Verhältnis von 1,05 eingestellt.

Somit betrugen die Mischungsverhältnisse wieder:

100 Gewichtsteile Prepolymer : 2,51 Gewichtsteile Vestanat IPDI.

Es wurde kontinuierlich gemischt und gefördert. Die Zeit bis zum Austritt des Extrudats aus dem Extruder betrug ca, zwei Minuten.

Das Extrudat wurde direkt einem Zweiwalzenauftragswerk zugeführt und dort zwischen zwei zulaufenden, beidseitig silikonisierten Polyesterfolien beschichtet und somit zu einem Film ausgeformt. Die Dicke des Films betrug 1,0 mm. Der Film wurde nach Abkühlung auf Raumtemperatur aufgewickelt, nachdem zuvor eine der beiden silikonisierten Polyesterfolien entfernt wurde. Der aufgewickelte Film wurde zwei Wochen bei Raumtemperatur gelagert.

Anschließend wurde er zum Teil wieder abgewickelt und gegen den auf silikonisierter Polyesterfolie in einer Dicke von 50 $\mu$m fertig ausgestrichen vorliegenden Polyacrylat-Haftklebstoff Durotac 280-1753 der Firma National Starch kaschiert. Die Kaschierung erfolgte ohne irgendeine Vorbehandlung. Die Versuche mit dem Polyacrylat-Haftklebstoff dienten der

# EP 2 276 784 B1

Erprobung der Verwendung als Träger- oder als Funktionsschicht in einem Klebeband.

Die Prüfergebnisse (Beispiel 2) sind in der folgenden Tabelle zusammengefasst:

Tabelle 5: Prüfergebnisse, Beispiel 2

| | hydroxyl-funktionalisiertes Polyurethan-Hotmelt-Prepolymer | Prepolymer nach Umsetzung (Vernetzung) in Lösung mit IPDI | Prepolymer nach Umsetzung (Vernetzung) in der Schmelze mit IPDI | Prepolymer nach Vernetzung und Kaschierung gegen den Polyacrylat-Haftklebstoff Durotac280-1753 |
|---|---|---|---|---|
| G' (bei 1 rad /sec und 25 °C) (Pa) | 50000 | 370000 | 390000 | |
| G" (bei 1 rad /sec und 25 °C) | 110000 | 320000 | 320000 | |
| G' (bei 10 rad /sec und 25 °C) | 270000 | 610000 | 650000 | |
| G" (bei 10 rad /sec und 25 °C) | 400000 | 450000 | 520000 | |
| Zugfestigkeit längs (N/mm$^2$) | 0,1 | 1,4 | 1,6 | |
| Zugfestigkeit quer (N/mm$^2$) | 0,1 | 1,3 | 1,4 | |
| Dehnung längs (%) | >1000 | 800 | 630 | |
| Dehnung quer (%) | >1000 | 670 | 650 | |
| Relaxation längs (%) | >90 | 48 | 51 | |
| Relaxation quer (%) | >90 | 49 | 50 | |
| Klebkraft, Stahl, 300 mm/min (N/cm) | 12,8 (Abzugswinkel: 180°) | 5,9 (Abzugswinkel: 180°) | 4,9 (Abzugswinkel: 180°) | 34,7 (Abzugswinkel : 90°) |
| Haltezeit im Schertest bei Raumtemperatur, Belastung 1 kg, (min) | 16 | 350 | 800 | 900 |

Die Klebkraft des Haftklebstoffs Durotac 280-1753, aufgetragen als 50 μm dicke Schicht auf eine 25 μm dicke Polyesterfolie, betrug zum Vergleich 5,9 N/cm.

**Beispiel 3**

Das hydroxyl-funktionalisierte Polyurethan-Hotmelt-Prepolymer wurde durch homogenes Mischen und somit chemisches Umsetzen der folgenden Ausgangsstoffe in den angegebenen Mengenverhältnissen hergestellt:

Tabelle 6: Zusammensetzung des hydroxyl-funktionalisierten Polyurethan-Hotmelt-Prepolymers, Beispiel 3

| Ausgangsstoff | Gewichtsanteil (Gew.%) | Prozentuales Verhältnis der Anzahl der OH-Gruppen zueinander | Prozentuales Verhältnis der Anzahl der OH-Gruppen tragenden Moleküle zueinander (idealisiert)* | Prozentuales Verhältnis der Anzahl aller funktionalisierten Moleküle zueinander (idealisiert)* |
|---|---|---|---|---|
| Voranol 1010L | 11,1 | 8,0 | 8,1 | 4,1 |
| Voranol CP 3355 | 6,4 | 2,0 | 1,3 | 0,7 |

(fortgesetzt)

| Ausgangsstoff | Gewichtsanteil (Gew.%) | Prozentuales Verhältnis der Anzahl der OH-Gruppen zueinander | Prozentuales Verhältnis der Anzahl der OH-Gruppen tragenden Moleküle zueinander (idealisiert)* | Prozentuales Verhältnis der Anzahl aller funktionalisierten Moleküle zueinander (idealisiert)* |
|---|---|---|---|---|
| Voranol P400 | 52,8 | 90,0 | 90,6 | 45,5 |
| Mark DBTL | 0,1 | | | |
| Vestanat IPDI | 29,6 | | | 49,7 |
| Summe | 100,00 | 100,00 | 100.00 | 100,0 |

*errechnet aus den Gewichtsanteilen und den OH-Zahlen bzw. NCO-Zahlen der Ausgangsstoffe unter der stark idealisierten Annahme, dass das Voranol 1010L und das Voranol P400 exakt die Funktionalität 2 haben und das Voranol CP 3355 exakt die Funktionalität 3 hat.

Zunächst wurden alle aufgeführten Ausgangsstoffe außer dem Vestanat IPDI bei einer Temperatur von 70 °C und einem Druck von 100 mbar 1,5 Stunden gemischt. Sodann wurde das Vestanat IPDI während einer Dauer von 15 Minuten zugemischt. Durch die entstandene Reaktionswärme erwärmte sich die Mischung auf 100 °C und wurde nun in Vorratsbehälter abgefüllt.

Das NCO/OH-Verhältnis betrug 0,98. Der theoretische Gelpunkt errechnet sich zu 0,98. 2,0 % der zur Bildung des hydroxyl-funktionalisierten Polyurethan-Hotmelt-Prepolymers eingebrachten Hydroxylgruppen stammen von einem Polypropylenglykol mit einer Funktionalität von größer zwei und einer zahlengemittelten Molmasse von 3500 g/mol. Somit sind ca. 1,3 % der OH-Gruppen tragenden Ausgangsstoffmoleküle trifunktionell. Insgesamt sind bei idealisierter Betrachtung 0,7 % der am molekularen Aufbau des hydroxyl-funktionalisierten Polyurethan-Hotmelt-Prepolymers beteiligten Moleküle trifunktionell und somit zur Bildung verzweigter Strukturen befähigt. 99,3 % der am molekularen Aufbau des hydroxyl-funktionalisierten Polyurethan-Hotmelt-Prepolymers beteiligten Moleküle haben eine relative Molmasse von kleiner oder gleich 1000 (bei idealisierter Betrachtung).

Das entstandene Prepolymer war bei Raumtemperatur fest und von der Konsistenz her gummiartig und eigenklebrig (haftklebrig). Die komplexe Viskosität $\eta^*$ betrug bei Raumtemperatur (23 °C) 36000 Pas und bei 70 °C 95 Pas. Die gewichtsgemittelte mittlere Molmasse $M_W$ betrug 99000 g/mol, die zahlengemittelte mittlere Molmasse $M_N$ 13600 g/mol.

Das entstandene Prepolymer war schmelzbar.

Für einen Teil der Versuche wurde es in Aceton gelöst.

Verwendung:

Zur Herstellung eines Haftklebstofffilms wurde das in Aceton gelöste Prepolymer bei Raumtemperatur auf eine 25 $\mu$m dicken Polyesterfolie beschichtet. Das Lösungsmittel wurde bei 70 °C abgedampft. Es wurde eine 50 $\mu$m dicke Schicht erhalten.

Zur Herstellung eines chemisch vernetzten Haftklebstoffs wurde das in Aceton gelöste Prepolymer bei Raumtemperatur mit Desmodur W gemischt. Das Mischungsverhältnis betrug 100 Gewichtsteile Prepolymer : 2,16 Gewichtsteile Desmodur W. Das Gesamt-NCO/OH-Verhältnis aus allen bis dahin eingeflossenen NCO- und OH-Gruppen betrug somit 1,05. Die Mischung wurde auf eine 25 $\mu$m dicken Polyesterfolie beschichtet. Das Lösungsmittel wurde bei 70 °C abgedampft. Es wurde eine 50 $\mu$m dicke Schicht erhalten.

Zur Herstellung eines chemisch vernetzten Klebebandträgers wurde das Prepolymer einem auf 80 °C vorgeheizten Doppelschneckenextruder kontinuierlich zugeführt. Das Polyisocyanat wurde gleichzeitig und an gleicher Stelle dem Doppelschneckenextruder kontinuierlich zudosiert. Als zudosiertes Polyisocyanat fand Desmodur W Verwendung.

Es wurde wieder ein Gesamt-NCO/OH-Verhältnis von 1,05 eingestellt.

Somit betrugen die Mischungsverhältnisse wieder:

100 Gewichtsteile Prepolymer : 2,16 Gewichtsteile Desmodur W.

Es wurde kontinuierlich gemischt und gefördert. Die Zeit bis zum Austritt des Extrudats aus dem Extruder betrug ca, zwei Minuten.

Das Extrudat wurde direkt einem Zweiwalzenauftragswerk zugeführt und dort zwischen zwei zulaufenden, beidseitig silikonisierten Polyesterfolien beschichtet und somit zu einem Film ausgeformt. Die Dicke des Films betrug 1,0 mm. Der Film wurde nach Abkühlung auf Raumtemperatur aufgewickelt, nachdem zuvor eine der beiden silikonisierten Polyesterfolien entfernt wurde. Der aufgewickelte Film wurde zwei Wochen bei Raumtemperatur gelagert. Anschließend wurde er zum Teil wieder abgewickelt und gegen den auf silikonisierter Polyesterfolie in einer Dicke von 50 $\mu$m fertig ausgestrichen vorliegenden Polyacrylat-Haftklebstoff Durotac 280-1753 der Firma National Starch kaschiert. Die Kaschierung erfolgte ohne irgendeine Vorbehandlung. Die Versuche mit dem Polyacrylat-Haftklebstoff dienten der Erprobung der Verwendung als Träger- oder als Funktionsschicht in einem Klebeband.

Die Prüfergebnisse (Beispiel 3 sind in der folgenden Tabelle zusammenefasst:

Tabelle 7: Prüfergebnisse, Beispiel 3

| | hydroxyl-funktionalisiertes Polyurethan-Hotmelt-Prepolymer | Prepolymer nach Umsetzung (Vernetzung) in Lösung mit Desmodur W | Prepolymer nach Umsetzung (Vernetzung) in der Schmelze mit Desmodur W | Prepolymer nach Vernetzung und Kaschierung gegen den Polyacrylat-Haftklebstoff Durotac280-1753 |
|---|---|---|---|---|
| G' (bei 1 rad /sec und 25 °C) (Pa) | 9000 | 90000 | 100000 | |
| G" (bei 1 rad /sec und 25 °C) | 28000 | 88000 | 95000 | |
| G' (bei 10 rad /sec und 25 °C) | 65000 | 250000 | 270000 | |
| G" (bei 10 rad /sec und 25 °C) | 110000 | 150000 | 160000 | |
| Zugfestigkeit längs (N/mm$^2$) | <0,1 | 0,7 | 0,8 | |
| Zugfestigkeit quer (N/mm$^2$) | <0,1 | 0,6 | 0,8 | |
| Dehnung längs (%) | >1000 | 400 | 450 | |
| Dehnung quer (%) | >1000 | 390 | 470 | |
| Relaxation längs (%) | >90 | 42 | 41 | |
| Relaxation quer (%) | >90 | 40 | 42 | |
| Klebkraft, Stahl, 300 mm/min (N/cm) | 8,0 (Abzugswinkel : 180°) | 1,3 (Abzugswinkel: 180°) | 0,9 (Abzugswinkel: 180°) | 15,0 (Abzugswinkel : 90°) |
| Haltezeit im Schertest bei Raumtemperatur, Belastung 1 kg, (min) | <1 | 260 | 250 | 320 |

Die Klebkraft des Haftklebstoffs Durotac280-1753, aufgetragen als 50 $\mu$m dicke Schicht auf eine 25 $\mu$m dicke Polyesterfolie, betrug zum Vergleich 5,9 N/cm.

**Beispiel 4**

Das hydroxyl-funktionalisierte Polyurethan-Hotmelt-Prepolymer wurde durch homogenes Mischen und somit chemisches Umsetzen der folgenden Ausgangsstoffe in den angegebenen Mengenverhältnissen hergestellt:

Tabelle 8: Zusammensetzung des hydroxyl-funktionalisierten Polyurethan-Hotmelt-Prepolymers, Beispiel 4

| Ausgangsstoff | Gewichtsanteil (Gew.%) | Prozentuales Verhältnis der Anzahl der OH-Gruppen zueinander | Prozentuales Verhältnis der Anzahl der OH-Gruppen tragenden Moleküle zueinander (idealisiert)* | Prozentuales Verhältnis der Anzahl aller funktionalisierten Moleküle zueinander (idealisiert)* |
|---|---|---|---|---|
| Voranol P400 | 17,2 | 40 | 40,0 | 20,8 |
| Voranol CP 6055 | 34,9 | 8,6 | 5,8 | 3,0 |
| Ethylenglykol | 2,5 | 40 | 40,0 | 20,8 |
| Lutensol AO7 | 2,8 | 2,8 | 5,6 | 2,9 |
| Voranol 2000L | 17,3 | 8,6 | 8,6 | 4,6 |
| Tinuvin 400 | 0,6 | | | |
| Tinuvin 292 | 0,3 | | | |
| Coscat 83 | 0,1 | | | |
| Aerosil R 202 | 2,1 | | | |
| Expancel 092 DETX 100 d25 | 1,8 | | | |
| Vestanat IPDI | 20,4 | | | 47,9 |
| Summe | 100,00 | 100,00 | 100.00 | 100,0 |

*errechnet aus den Gewichtsanteilen und den OH-Zahlen bzw. NCO-Zahlen der Ausgangsstoffe unter der stark idealisierten Annahme, dass das Voranol P400 und das Voranol 2000L exakt die Funktionalität 2 haben und das Voranol CP 6055 exakt die Funktionalität 3 hat. Für das Lutensol AO7 wurde die Funktionalität 1 angenommen.

Zunächst wurden alle aufgeführten Ausgangsstoffe außer dem Vestanat IPDI und dem Ethylenglykol bei einer Temperatur von 70 °C und einem Druck von 100 mbar 1,5 Stunden gemischt. Sodann wurde Ethylenglykol 15 Minuten lang zugemischt und anschließend das Vestanat IPDI während einer Dauer von 15 Minuten. Durch die entstandene Reaktionswärme erwärmte sich die Mischung auf 100 °C und wurde nun in Vorratsbehälter abgefüllt.

Das NCO/OH-Verhältnis betrug 0,92. Der theoretische Gelpunkt errechnet sich zu 0,92, wenn das Lutensol AO 7 nicht in die Berechnung einbezogen wird. 8,6 % der zur Bildung des hydroxyl-funktionalisierten Polyurethan-Hotmelt-Prepolymers eingebrachten Hydroxylgruppen stammen von einem Polypropylenglykol mit einer Funktionalität von größer zwei und einer zahlengemittelten Molmasse von 6000 g/mol. Somit sind ca. 5,8 % der OH-Gruppen tragenden Ausgangsstoffmoleküle trifunktionell. Insgesamt sind bei idealisierter Betrachtung 3,0 % der am molekularen Aufbau des hydroxyl-funktionalisierten Polyurethan-Hotmelt-Prepolymers beteiligten Moleküle trifunktionell und somit zur Bildung verzweigter Strukturen befähigt.

92,4 % der am molekularen Aufbau des hydroxyl-funktionalisierten Polyurethan-Hotmelt-Prepolymers beteiligten Moleküle haben eine relative Molmasse von kleiner oder gleich 1000 (bei idealisierter Betrachtung).

Das entstandene Prepolymer war bei Raumtemperatur fest und von der Konsistenz her gummiartig und eigenklebrig (haftklebrig). Die komplexe Viskosität $\eta^*$ betrug bei Raumtemperatur (23 °C) 75000 Pas und bei 70 °C 650 Pas. Die gewichtsgemittelte mittlere Molmasse $M_W$ betrug 130000 g/mol, die zahlengemittelte mittlere Molmasse $M_N$ 15900 g/mol.

Das entstandene Prepolymer war schmelzbar.

Verwendung:

Das Prepolymer wurde diesmal ausschließlich zur Herstellung eines chemisch vernetzten, viskoelastischen Klebebandträgers verwendet.

Dazu wurde es einem auf 80 °C vorgeheizten Doppelschneckenextruder kontinuierlich zugeführt. Das Polyisocyanat wurde gleichzeitig und an gleicher Stelle dem Doppelschneckenextruder kontinuierlich zudosiert. Als zudosiertes Polyisocyanat fand Vestanat IPDI Verwendung.

Es wurde ein Gesamt-NCO/OH-Verhältnis von 1,05 eingestellt.

Somit betrugen die Mischungsverhältnisse:

100 Gewichtsteile Prepolymer : 2,90 Gewichtsteile Vestanat IPDI.

Es wurde kontinuierlich gemischt und gefördert. Die Zeit bis zum Austritt des Extrudats aus dem Extruder betrug ca, zwei Minuten.

Das Extrudat wurde direkt einem Zweiwalzenauftragswerk zugeführt und dort zwischen zwei zulaufenden, beidseitig silikonisierten Polyesterfolien beschichtet und somit zu einem Film ausgeformt. Die Dicke des Films betrug 1,0 mm. Der Film wurde nach Abkühlung auf Raumtemperatur aufgewickelt, nachdem zuvor eine der beiden silikonisierten Polyesterfolien entfernt wurde. Der aufgewickelte Film wurde zwei Wochen bei Raumtemperatur gelagert. Anschließend wurde er zum Teil wieder abgewickelt und gegen den auf silikonisierter Polyesterfolie in einer Dicke von 50 μm fertig ausgestrichen vorliegenden Polyacrylat-Haftklebstoff Durotac 280-1753 der Firma National Starch kaschiert. Die Kaschierung erfolgte ohne irgendeine Vorbehandlung. Die Versuche mit dem Polyacrylat-Haftklebstoff dienten der Erprobung der Verwendung als Träger- oder als Funktionsschicht in einem Klebeband.

Die Prüfergebnisse (Beispiel 4) sind in der folgenden Tabelle zusammengefasst:

Tabelle 9: Prüfergebnisse, Beispiel 4

| | hydroxyl-funktionalisiertes Polyurethan-Hotmelt-Prepolymer (1mm dicker Film) | Prepolymer nach Umsetzung (Vernetzung) in der Schmelze mit Vestanat IPDI (1 mm dicker Film) | Prepolymer nach Vernetzung und Kaschierung gegen den Polyacrylat-Haftklebstoff Durotac280-1753 |
|---|---|---|---|
| G' (bei 1 rad /sec und 25 °C) (Pa) | 11000 | 100000 | |
| G" (bei 1 rad /sec und 25 °C) | 31000 | 85000 | |
| G' (bei 10 rad /sec und 25 °C) | 95000 | 270000 | |
| G" (bei 10 rad /sec und 25 °C) | 150000 | 240000 | |
| Zugfestigkeit längs (N/mm$^2$) | 0,1 | 1,1 | |
| Zugfestigkeit quer (N/mm$^2$) | 0,1 | 1,1 | |
| Dehnung längs (%) | >1000 | 770 | |
| Dehnung quer (%) | >1000 | 750 | |
| Relaxation längs (%) | 85 | 56 | |
| Relaxation quer (%) | 86 | 57 | |
| Klebkraft, Stahl, 300 mm/min (N/cm) | 11,1 (Abzugswinkel: 90°) | 4,1 (Abzugswinkel: 90°) | 29,0 (Abzugswinkel: 90°) |
| Haltezeit im Schertest bei Raumtemperatur, Belastung 1 kg, (min) | 13 | 6000 | >10000 |

Die Klebkraft des Haftklebstoffs Durotac280-1753, aufgetragen als 50 μm dicke Schicht auf eine 25 μm dicke Polyesterfolie, betrug zum Vergleich 5,9 N/cm.

**Vergleichsbeispiel 1**

Ein hydroxyl-funktionalisiertes Polyurethan-Hotmelt-Prepolymer wurde durch homogenes Mischen und somit chemisches Umsetzen der folgenden Ausgangsstoffe in den angegebenen Mengenverhältnissen hergestellt:

Tabelle 10: Zusammensetzung des hydroxyl-funktionalisierten Polyurethan-Hotmelt-Prepolymers, Vergleichsbeispiel 1

| Ausgangsstoff | Gewichtsanteil (Gew.%) | Prozentuales Verhältnis der Anzahl der OH-Gruppen zueinander | Prozentuales Verhältnis der Anzahl der OH-Gruppen tragenden Moleküle zueinander (idealisiert)* | Prozentuales Verhältnis der Anzahl aller funktionalisierten Moleküle zueinander (idealisiert)* |
|---|---|---|---|---|
| Voranol P400 | 36,3 | 42 | 43,5 | 22,5 |
| Voranol CP 1055 | 14,4 | 10 | 6,9 | 3,6 |
| MPDiol | 8,7 | 48 | 49,6 | 25,7 |
| Coscat 83 | 0,1 | | | |
| Vestanat IPDI | 40,5 | | | 48,2 |
| Summe | 100,00 | 100,00 | 100.00 | 100,0 |

*errechnet aus den Gewichtsanteilen und den OH-Zahlen beziehungsweise NCO-Zahlen der Ausgangsstoffe unter der stark idealisierten Annahme, dass das Voranol P400 exakt die Funktionalität 2 hat und das Voranol CP 1055 exakt die Funktionalität 3 hat.

Zunächst wurden alle aufgeführten Ausgangsstoffe außer dem Vestanat IPDI und dem MPDiol bei einer Temperatur von 70 °C und einem Druck von 100 mbar 1,5 Stunden gemischt. Sodann wurde das MPDiol 15 Minuten lang zugemischt und anschließend das Vestanat IPDI, ebenfalls während einer Dauer von 15 Minuten. Durch die entstandene Reaktionswärme erwärmte sich die Mischung auf 110 °C und wurde nun in Vorratsbehälter abgefüllt.

Das NCO/OH-Verhältnis betrug 0,91. Der theoretische Gelpunkt errechnet sich ebenfalls zu 0,91. 10,0 % der zur Bildung des hydroxyl-funktionalisierten Polyurethan-Hotmelt-Prepolymers eingebrachten Hydroxylgruppen stammen von einem Polypropylenglykol mit einer Funktionalität von größer zwei und einer zahlengemittelten Molmasse von 1000 g/mol. Somit sind ca. 6,9 % der OH-Gruppen tragenden Ausgangsstoffmoleküle trifunktionell. Insgesamt sind bei idealisierter Betrachtung 3,6 % der am molekularen Aufbau des hydroxyl-funktionalisierten Polyurethan-Hotmelt-Prepolymers beteiligten Moleküle trifunktionell und somit zur Bildung verzweigter Strukturen befähigt. 100 % der am molekularen Aufbau des hydroxyl-funktionalisierten Polyurethan-Hotmelt-Prepolymers beteiligten Moleküle haben eine relative Molmasse von kleiner oder gleich 1000 (bei idealisierter Betrachtung).

Das entstandene Prepolymer war bei Raumtemperatur fest und sprödhart und von der Konsistenz her nicht eigenklebrig (nicht haftklebrig). G' betrug bei 1 rad/sec und bei 10 rad/sec größer $10^6$ Pa, jeweils bei 25 °C. Für Haftklebeanwendungen vorteilhafte viskoelastische Eigenschaften waren nicht erkennbar.

**Vergleichsbeispiel 2**

Ein hydroxyl-funktionalisiertes Polyurethan-Hotmelt-Prepolymer wurde durch homogenes Mischen und somit chemisches Umsetzen der folgenden Ausgangsstoffe in den angegebenen Mengenverhältnissen hergestellt:

Tabelle 10: Zusammensetzung des hydroxyl-funktionalisierten Polyurethan-Hotmelt-Prepolymers, Vergleichsbeispiel 2

| Ausgangsstoff | Gewichtsanteil (Gew.%) | Prozentuales Verhältnis der Anzahl der OH-Gruppen zueinander | Prozentuales Verhältnis der Anzahl der OH-Gruppen tragenden Moleküle zueinander (idealisiert)* | Prozentuales Verhältnis der Anzahl aller funktionalisierten Moleküle zueinander (idealisiert)* |
|---|---|---|---|---|
| Voranol P400 | 45,0 | 50,0 | 50,0 | 25,3 |
| MPDiol | 9,4 | 50,0 | 50,0 | 25,3 |
| Coscat 83 | 0,1 | | | |
| Vestanat IPDI | 45,5 | | | 49,4 |

(fortgesetzt)

| Ausgangsstoff | Gewichtsanteil (Gew.%) | Prozentuales Verhältnis der Anzahl der OH-Gruppen zueinander | Prozentuales Verhältnis der Anzahl der OH-Gruppen tragenden Moleküle zueinander (idealisiert)* | Prozentuales Verhältnis der Anzahl aller funktionalisierten Moleküle zueinander (idealisiert)* |
|---|---|---|---|---|
| Summe | 100,00 | 100,00 | 100.00 | 100,0 |

*errechnet aus den Gewichtsanteilen und den OH-Zahlen beziehungsweise NCO-Zahlen der Ausgangsstoffe unter der stark idealisierten Annahme, dass das Voranol P400 exakt die Funktionalität 2 hat.

Zunächst wurden alle aufgeführten Ausgangsstoffe außer dem Vestanat IPDI und dem MPDiol bei einer Temperatur von 70 °C und einem Druck von 100 mbar 1,5 Stunden gemischt. Sodann wurde das MPDiol 15 Minuten lang zugemischt und anschließend das Vestanat IPDI, ebenfalls während einer Dauer von 15 Minuten. Durch die entstandene Reaktionswärme erwärmte sich die Mischung auf 110 °C und wurde nun in Vorratsbehälter abgefüllt.

Das NCO/OH-Verhältnis betrug 0,98. Der theoretische Gelpunkt errechnet sich zu 1,0. 0 % der zur Bildung des hydroxyl-funktionalisierten Polyurethan-Hotmelt-Prepolymers eingebrachten Hydroxylgruppen stammen von einem Polypropylenglykol mit einer Funktionalität von größer zwei und einer zahlengemittelten Molmasse von 1000 g/mol. Somit ist kein Ausgangsstoffmolekül trifunktionell. 100 % der am molekularen Aufbau des hydroxyl-funktionalisierten Polyurethan-Hotmelt-Prepolymers beteiligten Moleküle haben eine relative Molmasse von kleiner oder gleich 1000 (bei idealisierter Betrachtung).

Das entstandene Prepolymer war bei Raumtemperatur fest und sprödhart und von der Konsistenz her nicht eigenklebrig (nicht haftklebrig). G' betrug bei 1 rad/sec und bei 10 rad/sec größer $10^6$ Pa, jeweils bei 25 °C. Für Haftklebeanwendungen vorteilhafte viskoelastische Eigenschaften waren nicht erkennbar

**Patentansprüche**

1. Verwendung eines Hydroxyl-funktionalisierten Polyurethan-Hotmelt-Prepolymers, das das chemische Umsetzungsprodukt isocyanatreaktiver Ausgangsstoffe mit zumindest einem isocyanathaltigen Ausgangsstoff umfasst, **dadurch gekennzeichnet, dass**
die isocyanatreaktiven Ausgangsstoffe des hydroxyl-funktionalisierten Polyurethan-Hotmelt-Prepolymers zumindest ein Polypropylenglykol PI mit einer Funktionalität von größer zwei und einer zahlengemittelten mittleren Molmasse von größer oder gleich 3000 g/mol,
zumindest ein Polypropylenglykol PII mit einer Funktionalität von kleiner oder gleich zwei und einer zahlengemittelten mittleren Molmasse von kleiner oder gleich 1000 g/mol und zumindest einen Kettenverlängerer KI mit einer Funktionalität von kleiner oder gleich zwei und einer zahlengemittelten mittleren Molmasse von kleiner oder gleich 500 g/mol umfassen, wobei das Polypropylenglykol PII eine mindestens doppelt so große zahlengemittelte mittlere Molmasse wie der Kettenverlängerer KI hat und die zahlengemittelten Molmassen jeweils durch Gelpermeationschromatografie bestimmt werden,
und dass der isocyanathaltige Ausgangsstoff des hydroxyl-funktionalisierten Polyurethan-Hotmelt-Prepolymers ein aliphatisches oder alicyclisches Diisocyanat umfasst,
als Haftklebstoff.

2. Verwendung nach Anspruch 1, **dadurch gekennzeichnet, dass**
der anzahlmäßige Anteil der zur Bildung des hydroxyl-funktionalisierten Polyurethan-Hotmelt-Prepolymers eingebrachten Hydroxylgruppen, die von dem Polypropylenglykol PI stammen,
mindestens 2,5 %, bevorzugt mindestens 5,0 % beträgt und/oder maximal 25,0 %, bevorzugt maximal 20,0 % beträgt.

3. Verwendung nach einem der Ansprüche 1 oder 2, **dadurch gekennzeichnet, dass**
die zahlengemittelte mittlere Molmasse des Polypropylenglykols PI größer oder gleich 4500 g/mol, bevorzugt größer oder gleich 5500 g/mol beträgt.

4. Verwendung nach einem der vorangehenden Ansprüche, **dadurch gekennzeichnet, dass**
die zahlengemittelte mittlere Molmasse des Polypropylenglykols PII kleiner oder gleich 800 g/mol, bevorzugt kleiner oder gleich 600 g/mol beträgt.

**5.** Verwendung nach einem der vorangehenden Ansprüche, **dadurch gekennzeichnet, dass**
die zahlengemittelte mittlere Molmasse des Kettenverlängerers KI kleiner oder gleich 400 g/mol, bevorzugt kleiner oder gleich 200 g/mol beträgt.

**6.** Verwendung nach Anspruch1, **dadurch gekennzeichnet, dass**
das aliphatische oder alicyclische Diisocyanat Isophorondiisocyanat und/oder Dicyclohexylmethandiisocyanat ist oder umfasst.

**7.** Verwendung nach einem der vorangehenden Ansprüche, **dadurch gekennzeichnet, dass**
das Verhältnis der Gesamtanzahl der Isocyanat-Gruppen zur Gesamtanzahl der Hydroxylgruppen der an der chemischen Umsetzung zum hydroxyl-funktionalisierten Polyurethan-Hotmelt-Prepolymer beteiligten Stoffe zwischen größer oder gleich 0,80 und kleiner oder gleich 0,98, bevorzugt zwischen größer oder gleich 0,85 und kleiner oder gleich 0,97, besonders bevorzugt zwischen größer oder gleich 0,90 und kleiner oder gleich 0,96 liegt.

**8.** Verwendung eines hydroxyl-funktionalisierten Polyurethan-Hotmelt-Prepolymers, das das chemische Umsetzungsprodukt isocyanatreaktiver Ausgangsstoffe mit zumindest einem isocyanathaltigen Ausgangsstoff umfasst, **dadurch gekennzeichnet, dass**
die isocyanatreaktiven Ausgangsstoffe des hydroxyl-funktionalisierten Polyurethan-Hotmelt-Prepolymers
zumindest ein Polypropylenglykol PI mit einer Funktionalität von größer zwei und einer zahlengemittelten mittleren Molmasse von größer oder gleich 3000 g/mol,
zumindest ein Polypropylenglykol PII mit einer Funktionalität von kleiner oder gleich zwei und einer zahlengemittelten mittleren Molmasse von kleiner oder gleich 1000 g/mol und zumindest einen Kettenverlängerer KI mit einer Funktionalität von kleiner oder gleich zwei und einer zahlengemittelten mittleren Molmasse von kleiner oder gleich 500 g/mol umfassen,
wobei das Polypropylenglykol PII eine mindestens doppelt so große zahlengemittelte mittlere Molmasse wie der Kettenverlängerer KI hat und die zahlengemittelten Molmassen jeweils durch Gelpermeationschromatografie bestimmt werden,
und dass der isocyanathaltige Ausgangsstoff des hydroxyl-funktionalisierten Polyurethan-Hotmelt-Prepolymers ein aliphatisches oder alicyclisches Diisocyanat umfasst,
zur Herstellung von Polyurethanformkörpern und/oder Polyurethanschichten durch Umsetzung in der Schmelze mit einem oder mehreren Polyisocyanaten und Ausformung, wobei das Umsetzungsprodukt des Polyurethan-Hotmelt-Prepolymers mit dem Polyisocyanat beziehungsweise den Polyisocyanaten haftklebrige Eigenschaften besitzt.

**Claims**

**1.** Use of a hydroxyl-functionalized polyurethane hotmelt prepolymer comprising the chemical reaction product of isocyanate-reactive starting materials with at least one isocyanate-containing starting material, **characterized in that** the isocyanate-reactive starting materials of the hydroxyl-functionalized polyurethane hotmelt prepolymer comprise at least one polypropylene glycol PI having a functionality of more than two and a number-average molar mass of greater than or equal to 3000 g/mol,
at least one polypropylene glycol PII having a functionality of less than or equal to two and a number-average molar mass of less than or equal to 1000 g/mol,
and at least one chain extender KI having a functionality of less than or equal to two and a number-average molar mass of less than or equal to 500 g/mol, where the polypropylene glycol PII has a number-average molar mass at least twice as great as the chain extender KI and the number-average molar masses are determined in each case by gel permeation chromatography,
and **in that** the isocyanate-containing starting material of the hydroxyl-functionalized polyurethane hotmelt prepolymer comprises an aliphatic or alicyclic diisocyanate,
as a pressure-sensitive adhesive.

**2.** Use according to Claim 1, **characterized in that**
the numerical fraction of the hydroxyl groups that are introduced to form the hydroxyl-functionalized polyurethane hotmelt prepolymer and that originate from the polypropylene glycol PI is at least 2.5%, preferably at least 5.0%, and/or not more than 25.0%, preferably not more than 20.0%.

**3.** Use according to either of Claims 1 and 2, **characterized in that**
the number-average molar mass of the polypropylene glycol PI is greater than or equal to 4500 g/mol, preferably greater than or equal to 5500 g/mol.

4. Use according to any of the preceding claims, **characterized in that**
the number-average molar mass of the polypropylene glycol PII is less than or equal to 800 g/mol, preferably less than or equal to 600 g/mol.

5. Use according to any of the preceding claims, **characterized in that**
the number-average molar mass of the chain extender KI is less than or equal to 400 g/mol, preferably less than or equal to 200 g/mol.

6. Use according to Claim 1, **characterized in that**
the aliphatic or alicyclic diisocyanate is or comprises isophorone diisocyanate and/or dicyclohexylmethane diisocyanate.

7. Use according to any of the preceding claims, **characterized in that**
the ratio of the total number of isocyanate groups to the total number of hydroxyl groups of the substances involved in the chemical reaction to give the hydroxyl-functionalized polyurethane hotmelt prepolymer is between greater than or equal to 0.80 and less than or equal to 0.98, preferably between greater than or equal to 0.85 and less than or equal to 0.97, more preferably between greater than or equal to 0.90 and less than or equal to 0.96.

8. Use of a hydroxyl-functionalized polyurethane hotmelt prepolymer comprising the chemical reaction product of isocyanate-reactive starting materials with at least one isocyanate-containing starting material, **characterized in that**
the isocyanate-reactive starting materials of the hydroxyl-functionalized polyurethane hotmelt prepolymer comprise at least one polypropylene glycol PI having a functionality of more than two and a number-average molar mass of greater than or equal to 3000 g/mol, at least one polypropylene glycol PII having a functionality of less than or equal to two and a number-average molar mass of less than or equal to 1000 g/mol,
and at least one chain extender KI having a functionality of less than or equal to two and a number-average molar mass of less than or equal to 500 g/mol,
where the polypropylene glycol PII has a number-average molar mass at least twice as great as the chain extender KI and the number-average molar masses are determined in each case by gel permeation chromatography,
and **in that** the isocyanate-containing starting material of the hydroxyl-functionalized polyurethane hotmelt prepolymer comprises an aliphatic or alicyclic diisocyanate,
for producing polyurethane moldings and/or polyurethane layers by reaction in the melt with one or more polyisocyanates and shaping,
wherein the reaction product of the polyurethane hotmelt prepolymer with the polyisocyanate or polyisocyanates possesses pressure-sensitively adhesive properties.

**Revendications**

1. Utilisation d'un prépolymère thermofusible de polyuréthane à fonctionnalisation hydroxyle, qui comprend le produit de réaction chimique de matières premières réactives avec les isocyanates avec au moins une matière première contenant des isocyanates, **caractérisée en ce que** les matières premières réactives avec les isocyanates du prépolymère thermofusible de polyuréthane à fonctionnalisation hydroxyle comprennent :

au moins un polypropylène glycol PI ayant une fonctionnalité supérieure à deux et une masse molaire moyenne en nombre supérieure ou égale à 3 000 g/mol,
au moins un polypropylène glycol PII ayant une fonctionnalité inférieure ou égale à deux et une masse molaire moyenne en nombre inférieure ou égale à 1 000 g/mol,
et au moins un allongeur de chaînes KI ayant une fonctionnalité inférieure ou égale à deux et une masse molaire moyenne en nombre inférieure ou égale à 500 g/mol,
le polypropylène glycol PII ayant une masse molaire moyenne en nombre au moins deux fois plus grande que l'allongeur de chaînes KI et les masses molaires moyennes en nombre étant chacune déterminées par chromatographie par perméation de gel,
et **en ce que** la matière première contenant des isocyanates du prépolymère thermofusible de polyuréthane à fonctionnalisation hydroxyle comprend un diisocyanate aliphatique ou alicyclique,
en tant qu'adhésif de contact.

**2.** Utilisation selon la revendication 1, **caractérisée en ce que** la proportion en nombre des groupes hydroxyle introduits pour la formation du prépolymère thermofusible de polyuréthane à fonctionnalisation hydroxyle, qui proviennent du polypropylène glycol PI

est d'au moins 2,5 %, de préférence d'au moins 5,0 % et/ou

est d'au plus 25,0 %, de préférence d'au plus 20,0 %.

**3.** Utilisation selon l'une quelconque des revendications 1 ou 2, **caractérisée en ce que** la masse molaire moyenne en nombre du polypropylène glycol PI est supérieure ou égale à 4 500 g/mol, de préférence supérieure ou égale à 5 500 g/mol.

**4.** Utilisation selon l'une quelconque des revendications précédentes, **caractérisée en ce que** la masse molaire moyenne en nombre du polypropylène glycol PII est inférieure ou égale à 800 g/mol, de préférence inférieure ou égale à 600 g/mol.

**5.** Utilisation selon l'une quelconque des revendications précédentes, **caractérisée en ce que** la masse molaire moyenne en nombre de l'allongeur de chaînes KI est inférieure ou égale à 400 g/mol, de préférence inférieure ou égale à 200 g/mol.

**6.** Utilisation selon la revendication 1, **caractérisée en ce que** le diisocyanate aliphatique ou alicyclique est ou comprend le diisocyanate d'isophorone et/ou le diisocyanate de dicyclohexylméthane.

**7.** Utilisation selon l'une quelconque des revendications précédentes, **caractérisée en ce que** le rapport entre le nombre total de groupes isocyanate et le nombre total de groupes hydroxyle des matières participant à la réaction chimique pour former le prépolymère thermofusible de polyuréthane à fonctionnalisation hydroxyle est supérieur ou égal à 0,80 et inférieur ou égal à 0,98, de préférence supérieur ou égal à 0,85 et inférieur ou égal à 0,97, de manière particulièrement préférée supérieur ou égal à 0,90 et inférieur ou égal à 0,96.

**8.** Utilisation d'un prépolymère thermofusible de polyuréthane à fonctionnalisation hydroxyle, qui comprend le produit de réaction chimique de matières premières réactives avec les isocyanates avec au moins une matière première comprenant des isocyanates, **caractérisée en ce que** les matières premières réactives avec les isocyanates du prépolymère thermofusible de polyuréthane à fonctionnalisation hydroxyle comprennent :

au moins un polypropylène glycol PI ayant une fonctionnalité supérieure à deux et une masse molaire moyenne en nombre supérieure ou égale à 3 000 g/mol,

au moins un polypropylène glycol PII ayant une fonctionnalité inférieure ou égale à deux et une masse molaire moyenne en nombre inférieure ou égale à 1 000 g/mol,

et au moins un allongeur de chaînes KI ayant une fonctionnalité inférieure ou égale à deux et une masse molaire moyenne en nombre inférieure ou égale à 500 g/mol,

le polypropylène glycol PII ayant une masse molaire moyenne en nombre au moins deux fois plus grande que l'allongeur de chaînes KI et les masses molaires moyennes en nombre étant chacune déterminées par chromatographie par perméation de gel,

et **en ce que** la matière première contenant des isocyanates du prépolymère thermofusible de polyuréthane à fonctionnalisation hydroxyle comprend un diisocyanate aliphatique ou alicyclique,

pour la fabrication de corps moulés de polyuréthane et/ou de couches de polyuréthane par mise en réaction à l'état fondu avec un ou plusieurs polyisocyanates et façonnage,

le produit de réaction du prépolymère thermofusible de polyuréthane avec le polyisocyanate ou les polyisocyanates présentant des propriétés d'adhésion de contact.

EP 2 276 784 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1469024 A2
- EP 1469055 B1
- EP 1849811 A1
- WO 2008009542 A1
- EP 0801121 B1
- EP 0894841 B1
- EP 1095993 B1
- EP 0259094 B1
- EP 0305161 B1
- DE 10003318 A1
- DE 10252088 A1
- DE 2059570 A
- DE 102005039933 A
- DE 2248382 C2
- US 20070049719 A1

- US 20070129456 A1
- DE 1964834 A
- DE 2302564 C3
- EP 0135111 B1
- JP 2006182795 A
- DE 102004044086 A1
- US 5712216 A
- US 5693584 A
- WO 9956874 A
- WO 9951661 A
- WO 9959719 A
- WO 9964152 A
- US 5952261 A
- WO 9964493 A
- WO 9951657 A

**In der Beschreibung aufgeführte Nicht-Patentliteratur**

- **SATAS.** Handbook of Pressure Sensitive Adhesive Technology. 1999, 153-203
- Kunststoff-Handbuch, Polyurethane. 1993, 88-103

- **GAECHTER ; MÜLLER.** Taschenbuch der Kunststoff-Additive. 1979
- Encycl. Polym. Sci. Technol. vol. 14, 125-148